# EUROPÄISCHE PATENTSCHRIFT

(11) **EP 3 289 024 B1**
(45) Veröffentlichungstag und Bekanntmachung des Hinweises auf die Patenterteilung: **01.12.2021**
(21) Anmeldenummer: 16702893.5
(22) Anmeldetag: 21.01.2016
(51) Int. Cl.: C09D 5/24, H01B 1/02, B60N 2/56, C09D 7/43, C09D 7/62, C09D 7/40, H05B 3/14, H05B 3/34

(54) **ELEKTRISCH LEITFÄHIGE MATERIALZUSAMMENSETZUNG**
ELECTRICALLY CONDUCTIVE MATERIAL COMPOSITION
COMPOSITION DE MATIÈRES ÉLECTROCONDUCTRICES

(30) Priorität: 28.04.2015 DE 102015207814
(43) Veröffentlichungstag der Anmeldung: 07.03.2018
(73) Patentinhaber: Benecke-Kaliko AG, 30419 Hannover (DE)
(72) Erfinder: GERKEN, Andreas, 30161 Hannover (DE); BÜHRING, Jürgen, 30900 Wedemark (DE); VOGT, Carolin, 60316 Frankfurt am Main (DE); PRÖMPERS, Günter, 30827 Garbsen (DE)
(74) Vertreter: Continental Corporation
(86) Internationale Anmeldenummer: PCT/EP2016/051179
(87) Internationale Veröffentlichungsnummer: WO 2016/173726

(56) Entgegenhaltungen:
- EP-A1- 1 914 285
- EP-A1- 2 457 944
- US-A1- 2010 247 870
- US-A1- 2012 207 525
- KYOUNG-YONG CHUN ET AL: "Paper;Free-standing nanocomposites with high conductivity and extensibility;Free-standing nanocomposites with high conductivity and extensibility", NANOTECHNOLOGY, IOP, BRISTOL, GB, Bd. 24, Nr. 16, 27. März 2013 (2013-03-27) , Seite 165401, XP020239831, ISSN: 0957-4484, DOI: 10.1088/0957-4484/24/16/165401 in der Anmeldung erwähnt

## Beschreibung

Die Erfindung betrifft Zusammensetzungen, insbesondere elektrisch leitfähige Zusammensetzungen und die Verwendung solcher Zusammensetzungen als heizfähige Zusammensetzungen für Sitz- und Liegemöbel z. B. in Fahrzeugen.

Sitzheizungen gehören heutzutage bei vielen Kraftfahrzeugen zur serienmäßigen Ausstattung. Dabei werden in der Regel Heizsysteme eingesetzt, die sich nicht in einem festen Verbund mit dem darüber liegenden Dekor- und Sitzfläche beispielsweise aus textilem Material, Leder oder Kunstleder befinden.

In der Regel werden separate Heizstränge eingebettet zwischen zwei Vliesen als Heizmatten eingesetzt. Diese Heizmatten müssen in einem separaten Arbeitsschritt zwischen dem Dekormaterial und der darunterliegenden Auflagefläche eingebracht werden. Die Heizwirkung beruht häufig auf elektrisch leitfähigen Strängen oder Einzelfäden mit einem spezifischen elektrischen Widerstand basierend auf Metallfäden, Karbonfasern, leitfähigen textilen Fäden oder auch aus Gemischen solcher Fäden, die sich beim Anlegen einer Spannung erwärmen (elektrische Widerstandsheizung).

In den Textilien werden üblicherweise Metallfäden (Drähte), mit Metall beschichtete Fäden, mit Metallfäden ummantelte Fäden, Metallfilamente, Karbonfasern oder Karbonfilamente verwendet. Die Anordnung der Heizfäden ist entscheidend für die Funktionsfähigkeit unter Dehnbelastung, so dass sich zahlreiche Publikationen damit beschäftigen, wie die Heizfäden unempfindlich gegen mechanische Belastungen eingearbeitet werden können.

Bei Verwendung von elektrisch leitfähigen heizbaren Drähten oder Fäden muss für das Heizgebilde die Beibehaltung der Heizwirkung auch unter dynamischen Belastungen, wie sie im normalen automobilen Sitzgebrauch auftreten, gewährleistet werden. Um eine erhöhte Dehnfähigkeit zu gewährleisten, müssen die elektrisch leitfähigen Stränge in der Regel speziell angeordnet werden, beispielsweise wellenförmig, mäandrierend, in Zick-Zack-Anordnung oder sinusförmig, wobei die Stränge in ihrem Verlauf (vor allen in den Extrema) Berührpunkte haben, um eine flächige Beheizung zu gewährleisten. Die Anforderungen an derartige Heizsysteme sind vielfältig. So müssen unter anderem folgende Bedingungen erfüllt sein: lokale schnelle Erwärmung; schnelle und gesteuerte Aufheizung definierter Bereiche; Vermeidung von Hot Spots, d.h. lokale Überhitzungen nach Bruch von Leiterbahnen, wodurch andere Leiterbahnen durch zu hohen Stromfluss thermisch überlastet werden; kein Verlust der Heizleistung bei lokaler Beschädigung; keine Überhitzung bei lokaler Beschädigung; gute Kontaktierungsmöglichkeiten zu elektrischen Anschlussleitern; Möglichkeit der Verklebung auf Trägern / Sitzschäumen; keine negative Beeinflussung der Ventilation nach Verklebung bzw. keine negative Beeinflussung von atmungsaktiven Eigenschaften; Möglichkeit der Darstellung von unterschiedlichen Heizzonen mit unterschiedlicher Erwärmung; Widerstandsfähigkeit gegen (wiederholte) mechanische Belastung; Flexibilität; einfache Herstellung; einfache Positionierung (mit großen Toleranzen) und Fixierung; Möglichkeit von flexiblen Formen und Anordnung der Anschlusselektroden; leichte Anpassung von Konturen Übernähbarkeit ohne Verlust der Heizleistung; Korrosionsschutz von Anschlüssen und Heizelementen und ausreichende Heizleistung bei 12 - 24 V Anschlussspannung zum Heizen.

Um die Verwendung von heizbaren Strängen zu umgehen bzw. den Einsatz von heizbaren Strängen zu optimieren, werden auch elektrisch leitfähige, separat applizierbare polymere Systeme beschrieben.

In EP 1284278 A2 wird eine wässrige Beschichtungszusammensetzung zur Beschichtung auf Textilien zur Herstellung leitfähiger Schichten beschrieben.

Dabei wird eine wässrige (bevorzugt aliphatische) Polyurethandispersion mit leitfähigen Partikeln versetzt, wobei diese runden, körnigen Partikel einen nicht leitenden Kern und eine leitende Hülle besitzen. Die leitende Hülle besteht zumindest in Teilen aus einem Edelmetall (vorzugsweise Glashohlkugel oder Massivkern mit Gold-, Silber- oder Silber-Legierung als Beschichtung D90-Wert = 100 µm). Aufgabe dieser Erfindung ist die Herstellung flexibler Abschirmmaterialien. Aber auch eine mögliche Heizanwendung wird erwähnt. Andere leitfähige Partikel (Metallpulver, Ruße, Carbonfasern) werden als nicht ausreichend leitfähig beschrieben. Die Beschichtungsdicke beträgt vorzugsweise ca. 50 g/m². Eine ähnliche Anwendung wird in US 4419279 / US4496475 A beschrieben: unter Verwendung anorganischer mit Silber beschichteter Hohlkugeln oder Glassphären, insbesondere in einem Acrylat-basierenden Binder, so dass eine elektrisch leitfähige Paste hergestellt wird. Eine ähnliche Zusammensetzung wird in US6576336 B1 beschrieben: eine Polymer/ Wasser Emulsion mit leitfähigem Graphit und Nickel-, oder Silber-beschichteten Hohlkugeln. Auch in US4624865 A werden elektrisch leitfähige beschichtete Mikrohohlkugeln beschrieben. In EP0409099 A wird ein leitfähiges Pulver auf Basis von Mikrosphären zur Herstellung von Widerstandsheizungen beschrieben. Widerstandsheizungen, welche zur Herstellung leitfähige Pulver benötigen oder die allgemein herkömmliche leitfähige Pulver thematisieren, sind auch aus WO0043225 A2 , JP2001297627 A oder US4716081 A bekannt.

In WO2005/020246A1 wird die Herstellung elektrisch leitfähiger flexibler Flächengebilde beschrieben. Verwendet wird eine definierte Beschichtungsmasse in einem netzförmigen Auftrag. Ziel ist die Herstellung von Abschirmmaterialien oder Sitzheizungen. Ein netzförmiger Auftrag einer leitfähigen Beschichtung ist in WO2004024436 A1 beschrieben. Dabei besteht das aufgedruckte Muster aus einem Polymer, welches leitfähige Partikeln aus Graphit, leitfähigen Polymere oder einfachen Metallteilchen enthält. In WO0043225 A2 wiederum wird das Aufdrucken einer leitfähigen Paste beschrieben.

In WO 2009/033602 A1 wird eine leitfähige und druckfähige Paste auf Basis eines dispergierbaren thermoplastischen Polyurethans beschrieben, die sowohl dehnbar als auch verformbar ist. Hierbei müssen thermoplastische Polyurethane als feines Pulver mit einem bevorzugten mittlerem Durchmesser < 200 µm eingesetzt werden, d.h. es werden Suspensionen eingesetzt, in denen thermoplastische Polyurethane als Feststoff fein verteilt sind. Nachfolgend müssen aufgedruckte erfindungsgemäße Pasten für eine gute Dehnbarkeit noch einer kombinierten Wärme- und Druckbehandlung unterworfen werden. Die Herstellung von thermoplastischen Polyurethanpulvern mit einem mittleren Partikeldurchmesser < 200 µm ist durch die notwendigen langwierigen Mahlprozesse unter Kühlung mit flüssigem Stickstoff sehr aufwändig und kostenintensiv. Des Weiteren ist die erforderliche kombinierte Druck- und Wärmebehandlung für optimale Dehnfähigkeiten wegen des zusätzlichen Arbeitsschrittes unökonomisch und kann zudem Dekorflächen, auf denen die erfindungsgemäße Pasten appliziert wurde, zu irreversibler Schädigung der optisch sichtbaren Dekoroberfläche führen.

In den genannten Schriften, die die Verwendung eines elektrisch leitfähigen Polymersystems beispielsweise für Heizanwendungen oder zur Abschirmung elektromagnetischer Strahlung beschreiben, wird kein Lösungsweg aufgezeigt, bei der bei erhöhten Dehnungen des elektrisch leitfähigen und heizbaren Gebildes, die Heizleistung gleichbleibend auch bei wiederholter Dehnung erhalten bleibt, wobei auch die angestrebten Eigenschaften für eine Sitzheizung wie oben beschrieben erhalten bleiben.

Es wurden auch Versuche unternommen, ionische Flüssigkeiten als Leitfähigkeitsadditive einzusetzen. Dieses ist beispielsweise beschrieben in der DE 10 2009 044 345 A1. Hier werden vor allem Kautschukpolymere beschrieben, die ionische Flüssigkeiten enthalten, die aber zur Beschichtung von Textilien wegen der hohen Schmelzeviskosität beispielsweise zur Darstellung einer flexiblen dehnfähigen Flächenheizung nicht geeignet sind. Die Darstellung von elastischen elektrisch leitfähigen Polymeren wird zwar beschrieben aber nicht die Herstellung von Polymeren die auch unter höheren Dehnungen ihre elektrische Leitfähigkeit beibehalten.

In Nanotechnology 24 (2013) S. 1-9 beschreiben Chun et al. Mischungen aus Carbo-Nanotubes, Silbernanopartikel, ionische Flüssigkeiten und Polystyrol-Polyisopren-Polystyrol-Copolymeren für elektrisch leitfähige Polymerfilme, die unter Erhalt der elektrischen Leitfähigkeit bis 288% gedehnt werden können. Nachteilig ist hier vor allem, dass hier organische Lösungsmittel wie Toluol verwendet werden müssen, um die Zusammensetzung zu lösen. Dieses ist bezüglich der Umweltbelastung und der verbleibenden Restlösemittel in der Zusammensetzung sehr nachteilig.

In der EP 2457944 B1 wird eine Zusammensetzung beschrieben, die 100 Gew. -% wenigstens eines film- oder folienbildenden Polymers und wenigstens einen Füllstoff enthält, der aus elektrisch leitfähigen Partikeln besteht, wobei die Partikel dreidimensional verzweigt sind, und weitere Zusatzstoffe enthält. Durch die Verwendung dieser Zusammensetzung kann ein elektrisch leitfähiges oder auch elektrisch heizbares System erzeugt werden, welches auch unter Dehnung > 2 % oder nach mehrfacher Dehnung > 2% und anschließender Entlastung die elektrische Leitfähigkeit beibehält.

Nachteil der beschriebenen Lösung ist, dass relativ hohe Anteile der elektrisch leitfähigen Füllstoffe in Relation zur Polymermatrix benötigt werden und so zum einen die mechanischen Eigenschaften des Polymers negativ beeinträchtigt werden können und zum anderen hohe Kosten entstehen, da die beschriebenen Leitfähigkeitspartikel in der Regel auf versilberten Partikeln beruhen.

In den genannten Schriften, die die Verwendung eines elektrisch leitfähigen Polymersystems beispielsweise für Heizanwendungen oder zur Abschirmung elektromagnetischer Strahlung beschreiben, wird kein Lösungsweg aufgezeigt, bei der bei erhöhten Dehnungen des elektrisch leitfähigen und heizbaren Gebildes, die Heizleistung gleichbleibend auch bei wiederholter Dehnung erhalten bleibt, wobei auch die angestrebten Eigenschaften für eine Sitzheizung wie oben beschrieben erhalten bleiben. Nur die EP 2457944 B1 bietet hier eine Lösung an.

Nachteil des elektrisch leitfähigen Polymersystems aus EP 2 457 944 B1 ist das schnelle Ansteigen des Widerstandes bei höheren Dehnungen. Das sorgt insbesondere bei ungleichen Druckverteilungen auf das Material zu Widerstand "hot spots" und somit zu einer ungleichen Wärmeabgabe.

In einem anderen Ansatz / DE 10 2009 044 345 A1) werden Kautschukpolymere beschrieben, die ionische Flüssigkeiten enthalten, die aber zur Beschichtung von Textilien wegen der hohen Schmelzeviskosität beispielsweise zur Darstellung einer flexiblen dehnfähigen Flächenheizung nicht geeignet sind. Die Darstellung von elastischen elektrisch leitfähigen Polymeren wird zwar beschrieben aber nicht die Herstellung von Polymeren die auch unter höheren Dehnungen ihre elektrische Leitfähigkeit beibehalten.

Elektrisch leitfähige und elektrisch heizbare Systeme, die auf polymeren Substanzen beruhen, die mit elektrisch leitfähigen Füllstoffen gefüllt sind, die ein elektrisch leitfähiges zwei- oder dreidimensionales Netzwerk in einer polymeren Matrix bilden, sind nach dem Stand der Technik zwar elektrisch leitfähig und besitzen eine Heizwirkung. Die elektrische Leitfähigkeit und somit die Heizwirkung brechen jedoch in der Regel bei Dehnungen des polymeren Systems um mehr als 2 - 3% zusammen. Der Zusammenbruch der elektrischen Leitfähigkeit ist häufig irreversibel, weil das dreidimensionale Netzwerk aus den Leitfähigkeitspartikeln nicht wieder rückgebildet wird, da sich die Leitfähigkeitspartikel sich nicht mehr im gleichen Maße wie vor der Dehnung berühren. Nur wenn in ausreichendem Maße dendritische Leitfähigkeitspartikel eingesetzt werden wie in der EP 2457944 B1 beschrieben, lässt sich dieser Nachteil überwinden. Allerdings müssen vergleichsweise hohe Mengen für eine hohe Dehnfähigkeit der aus der Zusammensetzung gebildeten Filme eingesetzt werden, was wiederum aus Kostengründen und hinsichtlich der mechanischen Filmeigenschaften nachteilig ist.

Es ist daher die Aufgabe der Erfindung, eine Zusammensetzung bereitzustellen, die elektrisch leitfähig und elektrisch heizfähig ist und welche nach Applikation auf einer Fläche dehnfähig ist, wobei die elektrische Leitfähigkeit und/oder Heizfähigkeit auch bei hohen Dehnungen auf einem hohen Niveau verbleibt. Gleichzeitig soll durch die Zusammensetzung eine homogene und schnelle Heizwirkung gewährleistet werden und die kundenrelevanten optischen Eigenschaften der Fläche sollen nicht beeinträchtigt werden. Eine weitere Aufgabe der Erfindung ist, dass die Erfindung ohne die Verwendung organischer Lösungsmittel erreicht werden soll und dass die Lösung gegenüber dem Stand der Technik kostengünstiger ist und weniger Gewichtsanteile an leitfähigen Füllstoffanteil besitzt.

Eine homogene Erwärmung einer größeren Fläche soll durch Anwendung der Erfindung schnell möglich sein.

Insbesondere soll das erfindungsgemäße elektrisch leitfähige Polymersystem direkt mit einer sichtbaren automobilen Dekoroberfläche beispielsweise aus Textil, Leder oder Kunstleder verbindbar sein, so dass das Dekormaterial in gebräuchlichen Verfahren wie beispielsweise Vernähen, Verpolstem, Verkleben, Kaschieren, Schneiden, Hinterspritzen, Hinterschäumen, RIM, R-RIM, Tiefziehen verarbeitet werden kann und zugleich elektrisch leitfähig und/oder elektrisch heizbar ist, ohne dass zusätzliche Arbeitsschritte notwendig sind. Das Dekormaterial soll die Anforderungen insbesondere auch der Automobilindustrie an diese Materialien erfüllen.

### Zusammenfassung

Die oben beschriebene Aufgabe wird durch die erfindungsgemäßen Zusammensetzungen gelöst. Entsprechend richtet sich ein Aspekt der vorliegenden Erfindung auf eine Zusammensetzung umfassend mindestens ein Matrixpolymer, elektrisch leitfähige Partikel, mindestens ein organisches Flüssigsalz und wenigstens einen Verdicker, wobei das Gewichtsverhältnis zwischen Matrixpolymer und elektrisch leitfähigen Partikel zwischen 4:1 und 1:5 liegt; und das Gewichtsverhältnis zwischen Matrixpolymer und organischem Flüssigsalz zwischen 1000:1 und 1:1 liegt; und die Summe der Gewichte aus Matrixpolymer, elektrisch leitfähigen Partikel und organischem Flüssigsalz mindestens 65 Gew.-% bezogen auf das Gesamtgewicht der Zusammensetzung beträgt.

Eine bevorzugte Ausführungsform richtet sich auf eine erfindungsgemäße Zusammensetzung, wobei das Matrixpolymer ausgewählt ist aus einer Gruppe bestehend aus Polyurethanharz, Acrylatharz, Styrolacrylat, Styrol/Butadien-Coplymerisat, Polyvinylester, Vinylester-Olefin-Copolymer, Vinylester-Acrylat-Copolymer oder Silikonkautschuk.

Eine weitere bevorzugte Ausführungsform richtet sich auf eine erfindungsgemäße Zusammensetzung, wobei die elektrisch leitfähigen Partikel in der Zusammensetzung aus dreidimensional verzweigten Partikeln bestehen.

Eine weitere bevorzugte Ausführungsform richtet sich auf eine erfindungsgemäße Zusammensetzung, wobei die dreidimensional verzweigten Partikel dendritisch sind.

Eine weitere bevorzugte Ausführungsform richtet sich auf eine erfindungsgemäße Zusammensetzung, wobei die Partikel mit Silber beschichtet sind.

Eine weitere bevorzugte Ausführungsform richtet sich auf eine erfindungsgemäße Zusammensetzung, wobei das organische Flüssigsalz ein organisches Kation enthält, das ausgewählt ist aus der Gruppe bestehend aus gegebenenfalls substituiertem aromatischen Kation mit 5, 6, 9, 10 oder 14 Kohlenstoffringatomen, wobei ein, zwei, drei oder vier Kohlenstoffringatome durch ein Schwefel, Sauerstoff und/oder Stickstoffatom ausgetauscht sein können, und ein gegebenenfalls substituiertes aliphatisches C₁-C₁₂-Aminoalkyl.

Eine weitere bevorzugte Ausführungsform richtet sich auf eine erfindungsgemäße Zusammensetzung, wobei das organische Flüssigsalz aus einem Salz besteht worin das Kation ausgewählt ist aus der Gruppe bestehend aus Imidazolinium-, Pyridinium-, Pyrrolidinium-, Guanidinium-, Uronium-, Thiouronium-, Piperidinium-, Morpholinium-, Phosphonium-, C₁-C₆-Alkylammonium-, jeweils mit ein, zwei oder drei Gruppen unabhängig voneinander ausgewählt aus Amino-, C₁-C₆-Hydroxyalkyl-, Hydroxy-, Halogen-, C₁-C₆-Halogenalkyl-, C₁-C₆-Alkyl- substituiertes Imidazolinium-, Pyridinium-, Pyrrolidinium-, Guanidinium-, Uronium-, Thiouronium-, Piperidinium-, Morpholinium-, Phosphonium-, und Alkylammonium-Kation.

Eine weitere bevorzugte Ausführungsform richtet sich auf eine erfindungsgemäße Zusammensetzung, wobei Verdicker hydrophobe und hydrophile Bestandteile besitzen ausgewählt aus hydrophob modifizierte Polyacrylate, Celluloseether, Polyacrylamide oder Polyether.

Ein weiterer Aspekt der vorliegenden Erfindung richtet sich auf die Verwendung einer erfindungsgemäßen Zusammensetzung als Beschichtungsmaterial.

Ein weiterer Aspekt der vorliegenden Erfindung richtet sich auf die Verwendung einer erfindungsgemäßen Zusammensetzung als Bestandteil eines Sitz- oder Liegemöbels.

Ein weiterer Aspekt der vorliegenden Erfindung richtet sich auf die Verwendung einer erfindungsgemäßen Zusammensetzung zum Aufbau mehrschichtiger Verbundgebilde.

Ein weiterer Aspekt der vorliegenden Erfindung richtet sich auf ein Verfahren zur Herstellung einer erfindungsgemäßen Zusammensetzung umfassend die folgenden Verfahrensschritte:
- Mischen eines Matrixpolymers, bevorzugt einer Matrixpolymerdispersion, mit elektrisch leitfähigen Partikeln und mindestens einem organischen Flüssigsalz;
- Hinzufügen von wenigstens einem, bevorzugt einem, Verdicker; und
- optional Hinzufügen von weiteren Hilfsstoffen ausgewählt aus Stoffe zur Einstellung des pH-Wertes, Flammschutzmittel, Pigmente und Einfärbemittel, Stabilisatoren gegen oxidativen, thermischen, hydrolytischen, strahlungsinduzierten oder mikrobiellen Abbau oder Alterung, Konservierungsmittel, Mattierungsmittel, Entschäumungshilfen, Verlaufshilfsmittel, Dispergierhilfsmittel, Weichmacher, Vernetzungshilfsmittel, Gleitmittel, Rheologiehilfsmittel, Trennmittel, Verstärkungsstoffe, Füllstoffe, Katalysatoren, Hydrophobierungsmittel und Treibmittel.
- optional Hinzufügen von einem Vernetzer;
- optional Entfernen von Wasser aus der Zusammensetzung.

### Definitionen

Der unbestimmte Ausdruck "ein" steht im Allgemeinen für "wenigstens ein" im Sinne von "ein oder mehr". Der Fachmann versteht je nach Situation, dass nicht der unbestimmte Artikel sondern der bestimmte Artikel "ein" im Sinne von "1" gemeint sein muss bzw. der unbestimmte Artikel "ein" auch in einer Ausführungsform den bestimmten Artikel "ein" (1) mit umfasst.

Der Ausdruck "zwischen" bei Angaben von Bereichen wie z. B. bei Gewichtsverhältnissen beinhaltet alle Werte zwischen einer genannten Unter- und einer genannten Obergrenze inklusive der Unter- und Obergrenze. Als Beispiel: ein "Gewichtsverhältnis zwischen Matrixpolymer und elektrisch leitfähigen Partikel zwischen 4:1 und 1:5" beinhaltet alle Gewichtsverhältnisse von 4:1 bis 1:5 einschließlich der Gewichtsverhältnisse 4:1 und 1:5.

Der Ausdruck "umfassen" (oder "umfassend") bezogen auf die erfindungsgemäßen Zusammensetzungen oder Bestandteile dieser Zusammensetzungen bedeutet, dass mindestens die dem Ausdruck "umfassen" (oder "umfassend") folgenden Komponenten in einer erfindungsgemäßen Zusammensetzung bzw. in Bestandteilen davon in selbiger vorliegen müssen. Dem Fachmann ist jedoch klar, dass generell auch weitre Komponenten in einer derartigen erfindungsgemäßen Mischung vorliegen können bzw. weitere dieser Bestandteile vorliegen können, aber nicht zwangsläufig müssen. Entsprechend bezieht sich eine Ausführungsform, wenn in der vorliegenden Beschreibung der Erfindung der Ausdruck "umfassen" (oder "umfassend") genutzt wird immer auch auf eine Ausführungsform, in der die Liste der Komponenten in einer erfindungsgemäßen Zusammensetzung (oder einer Liste möglicher Komponenten/Ausführungsformen eines Bestandteils), die dem Ausdruck "umfassen" (oder "umfassend") folgen, abschließend ist, d.h. der Ausdruck "umfassen" (oder "umfassend") beinhaltet auch Zusammensetzungen, die nur die aufgelisteten Komponenten enthält (bzw. eine Aufzählung möglicher Komponenten/Ausführungsformen eines Bestandteils, die abschließend ist). In anderen Worten, der Ausdruck "umfassen" ist normalerweise nicht einschränkend, kann jedoch in einer Ausführungsform auch limitierend sein (bestehend aus).

Der Ausdruck Matrixpolymer wie hierin genutzt bezieht sich auf eine chemische Verbindung aus Ketten- oder verzweigten Molekülen (Makromolekülen), die wiederum aus gleichen oder gleichartigen Einheiten (konstitutionellen Repetiereinheiten) bestehen und die nach erfolgter Polymerisierung den Grundkörper der erfindungsgemäßen Zusammensetzung bilden.

Matrixpolymere können nach der Anzahl der Grundstoffe Monomere, aus denen sie erzeugt werden, eingeteilt werden. Der Ausdruck Matrixpolymere im Sinne der vorliegenden Erfindung umfasst auch Copolymere, die aus verschiedenen Monomeren aufgebaut sind, wie Polyester, Polyurethane und auch einige Polyamide.

Die in dieser Schrift verwendeten Angaben bezüglich Gewichtsverhältnissen bezogen auf die Menge an Matrixpolymer beziehen sich immer auf die Gesamtmenge des bei der Herstellung der erfindungsgemäßen Zusammensetzung verwendeten Matrixpolymeres. Bei ungelösten Matrixpolymer ist es die Gesamtmenge des ungelösten Matrixpolymers, bei Verwendung eines wasserhaltigen Matrixpolymers - der Begriff umfasst in Wasser gelöstes Matrixpolymer, teilweise in Wasser lösliche Matrixpolymere und einer Matrixpolymerdispersion zur Herstellung einer erfindungsgemäßen Zusammensetzung - auf den polymeren Festkörper eines wasserhaltigen Matrixpolymers, d.h. auf die Gesamtmenge des matrixpolymeren Festkörpers, der (teilweise) in Wasser gelösten wurde bzw. auf den polymeren Festkörper der Matrixpolymerdispersion.

Der Ausdruck "elektrisch leitfähige Partikel" wie hierin genutzt bezieht sich auf elektrisch leitfähige annähernd sphärische Partikel (Körner) oder elektrisch leitfähige Fasern. Die Partikelgröße kann, z. B. durch Laserbeugungs-Partikelgrößenanalyse bestimmt werden (z. B. Witt, 2011). Bei Körnern im Sinne der vorliegenden Erfindung sollte das Aspektverhältnis (das Verhältnis aus der Tiefe bzw. Höhe einer Struktur zu ihrer kleinsten lateralen Ausdehnung) typischerweise bei 1 liegen, kann aber im Sinn der vorliegenden Erfindung auch von 1 bis 3 reichen, wie z. B. von 1 bis 2 oder von 1 bis 1,5. Bei Fasern im Sinne der vorliegenden Erfindung sollte das Aspektverhältnis größer als 3 sein.

Der Durchmesser von Körnern im Sinne der vorliegenden Erfindung sollte typischerweise in keiner Ausrichtung 100 µm überschreiten. Der Durchmesser von Fasern sollte typischerweise 100 µm nicht überschreiten, wobei das Aspektverhältnis von Durchmesser zu Länge generell über 5 liegen sollte. Die elektrische Leitfähigkeit kann durch entsprechende Metalle und/oder Kohlenstoff (Carbo-Nanotubes) gegeben sein. Neben einem elektrischen Leiter wie Metall (z. B. Kupfer, Eisen, Gold, Silber, Platin oder Nickel) und/oder Kohlenstoff können weitere Stoffe diese elektrisch leitfähigen Partikel bilden. Beispielhafte elektrisch leitfähige Partikel sind Metallpartikel (z. B. Kupferpartikel oder mit Silber beschichtete Kupferpartikel), mit Metall beschichtete Glas- oder Plastikhohlkugeln, mit Metall beschichtete Glas- oder Plastikkugeln, mit Metall beschichtete Glas- oder Plastikfasern, Metallpulver oder Carbo-Nanotubes.

Die Bedeutung des Ausdrucks "Folie" im Zusammenhang mit Polymeren, insbesondere Matrixpolymeren im Sinne der vorliegenden Erfindung, ist dem Fachmann geläufig. Generell ist eine Folie ein zweidimensional ausgedehntes Gebilde mit annähernd gleicher Dicke, wobei die Abmessungen der Fläche jeweils mindestens um einen Faktor 10, wie z. B. mindestens um einen Faktor 20, oder mindestens um einen Faktor 100 größer sind als die durchschnittliche Dicke. Eine Polymerfolie wie hierin beschrieben umfasst auch einen Polymerfilm, der auf eine Fläche aufgetragen ist. Entsprechend kann ein folienbildendes Matrixpolymer auch oder nur ein filmbildendes Matrixpolymer sein.

Der Ausdruck "organisches Flüssigsalz" wie hierin genutzt bezieht sich auf ein Salz, das bei 25 °C und 1000 hPa, bevorzugt mindestens zwischen 25 °C und 100 °C bei 1000 hPa, durch die schlechte Koordinierung der Ionen als Flüssigkeit vorliegt, und das ein organisches Ion, bevorzugt ein organisches Kation, aufweist. Eine Flüssigkeit im Sinne der vorliegenden Erfindung ist ein Stoff, dessen Teilchen sich ständig nichtperiodisch bewegen sowie keinerlei Fernordnung im physikalischen Sinne jedoch einer Nahordnung im physikalischen Sinne unterliegen, und deren mittlere freie Weglänge in der Größenordnung des Teilchendurchmessers liegt. Phasendiagramme bzw. das Bestimmen von Schmelz- und Siedepunkt zur Ermittlung des Aggregatzustandes eines Stoffes können durch den Fachmann mit bekannten Mitteln und Methoden erzeugt werden. Als bevorzugtes Beispiel sei hier DSC (Differential Scanning Calorimetry) genannt wie z. B. in J. Solution Chem (2008) 37, S. 1271-1287 beschrieben.

Der Ausdruck "Verdicker" wie hierin genutzt bezieht sich auf rein durch Quellung wirkenden Verdickern als auch auf assoziativ wirksame Verdicker, die ähnlich Tensiden hydrophobe und hydrophile Bestandteile besitzen.

Der Ausdruck "Vernetzer" wie hierin genutzt bezieht sich auf Stoffe, die mindestens zwei reaktive Gruppen aufweisen. Der Ausdruck umfasst sowohl homobifunktionelle Vernetzer als auch heterobifunktionelle Vernetzer. Diese können beispielsweise hydrophob oder hydrophil modifizierte Isocyanatdimere, -oligomere oder Präpolymere, Carbodiimide auf Basis von Dimeren oder Präpolymeren oder Dimere, Oligomere oder Präpolymere mit Ketoxim-blockierten Isocyanatgruppen sein oder Uretdion-verknüpfte Dimere oder Präpolymere. Bevorzugt sind Vernetzer mit freien oder reversibel blockierten Isocyanatgruppen.

### Erfindungsgemäße Zusammensetzungen

Die erfindungsgemäßen Zusammensetzung umfasst mindestens ein Matrixpolymer, elektrisch leitfähige Partikel, mindestens ein organisches Flüssigsalz (OF) und wenigstens einen Verdicker wobei das Gewichtsverhältnis zwischen Matrixpolymer und elektrisch leitfähigen Partikeln zwischen 4:1 und 1:5 liegt; und das Gewichtsverhältnis zwischen Matrixpolymer und organischem Flüssigsalz zwischen 1000:1 und 1:1 liegt; und die Summe der Gewichte aus Matrixpolymer, elektrisch leitfähigen Partikel und organischem Flüssigsalz mindestens 65 Gew.-% bezogen auf das Gesamtgewicht der Zusammensetzung beträgt.

In einer bevorzugten Ausführungsform ist die Summe aus Matrixpolymer, elektrisch leitfähigen Partikel und organischem Flüssigsalz einer erfindungsgemäße Zusammensetzung mindestens 80 Gew.-%, wie z. B. mindestens 90 Gew.-% oder mindestens 95 Gew.-%, bezogen auf das Gesamtgewicht der erfindungsgemäßen Zusammensetzung.

In einer erfindungsgemäßen Zusammensetzung beträgt das Gewichtsverhältnis zwischen Matrixpolymer (bei Anwesenheit von mehr als einem Matrixpolymer in einer erfindungsgemäßen Zusammensetzung die Summe der verschiedenen Matrixpolymere) und elektrisch leitfähigen Partikel (bei Anwesenheit von mehr als einem elektrisch leitfähigen Partikel in einer erfindungsgemäßen Zusammensetzung die Summe der verschiedenen elektrisch leitfähigen Partikel) zwischen 4:1 und 1:5. In anderen Worten, das Gewichtsverhältnis Matrixpolymer zu elektrisch leitfähigen Partikel liegt zwischen pro 4 Gewichtsanteile Matrixpolymer ein Gewichtsanteil elektrisch leitfähiges Partikel (4:1) und pro 1 Gewichtsanteil Matrixpolymer 5 Gewichtsanteile elektrisch leitfähigen Partikel.

In einer bevorzugten Ausführungsform beträgt das Gewichtsverhältnis zwischen Matrixpolymer und elektrisch leitfähigen Partikel zwischen 4:1 und 1:4, mehr bevorzugt zwischen 2:1 und 1:4 und noch mehr bevorzugt zwischen 2:1 und 1:3.

Unterhalb eines Gewichtsverhältnisses von 4:1 bildet sich in der Regel nur ein recht schwaches Leitfähigkeitsnetzwerk aus, da zu wenig elektrisch leitfähiges Partikel in einer solchen Zusammensetzung vorhanden ist. Oberhalb eines Gewichtsverhältnisses von 1:5 ist das elektrisch leitfähige Partikel nur noch sehr schwer bei der Herstellung einer erfindungsgemäßen Zusammensetzung in die Reaktionsmasse einmischbar bzw. dispergierbar.

In einer bevorzugten Ausführungsform sind die elektrisch leitfähigen Partikel dreidimensional verzweigt. In einer mehr bevorzugten Ausführungsform sind die dreidimensional verzweigten elektrisch leitfähigen Partikel dendritisch ausgebildet. Dendritisch bedeutet in Form von Dendriten vorliegend, wobei der Begriff Dendriten wiederum abgeleitet ist vom griechischen Wort "dendron" für Baum. Dendriten sind daher bäumchen- bis moosförmige Gebilde (siehe hierzu auch Römpp-Chemie-Lexikon Online, Version 3.9, 2010). In einer bevorzugten Ausführungsform beträgt die Summe der Gewichte aus Matrixpolymer, elektrisch leitfähigen Partikeln und ein oder mehrere organischem Flüssigsalze mindestens 80 Gew.-%, mindestens 90%, mindestens 95% bezogen auf das Gesamtgewicht der Zusammensetzung.

In einer weiteren bevorzugten Ausführungsform der vorliegenden Erfindung umfassen die übrigen Gewichtsanteile (35 Gew.-%, 20 Gew.-%, 10 Gew.-% bzw. 95 Gew.-%) einen oder mehrere Zusätze ausgewählt aus der Gruppe bestehend aus Verdicker, Stoffe zur Einstellung des pH-Wertes, Flammschutzmittel, Pigmente und Einfärbemittel, Stabilisatoren gegen oxidativen, thermischen, hydrolytischen, strahlungsinduzierten oder mikrobiellen Abbau oder Alterung (Alterungsschutzmittel wie Antioxidantien, gehinderte Amine oder UV-Absorber etc., Hydrolyseschutzmittel, biozid wirksame Mittel), Konservierungsmittel, Mattierungsmittel, Entschäumungshilfen, Verlaufshilfsmittel, Dispergierhilfsmittel, Weichmacher, Vernetzungshilfsmittel, Gleitmittel, Rheologiehilfsmittel, Trennmittel, Verstärkungsstoffe, Füllstoffe, Katalysatoren, Hydrophobierungsmittel, Pigmente, Farbstoffe und Treibmittel. In einer weiteren bevorzugten Ausführungsform bestehen die übrigen Gewichtsanteile (35 Gew.-%, 20 Gew.-%, 10 Gew.-% bzw. 95 Gew.-%) aus einen oder mehrere Zusätze der oben aufgezählten Gruppe.

In einer weiteren bevorzugten Ausführungsform besteht eine erfindungsgemäße Zusammensetzung aus einem oder mehrere Matrixpolymer(en), elektrisch leitfähigen Partikel und einer oder mehreren organischen Flüssigsalze.

In einer erfindungsgemäßen Zusammensetzung beträgt das Gewichtsverhältnis zwischen Matrixpolymer (bei Anwesenheit von mehr als einem Matrixpolymer in einer erfindungsgemäßen Zusammensetzung die Summe der verschiedenen Matrixpolymere) und organischem Flüssigsalz (bei Anwesenheit von mehr als einem organischem Flüssigsalz in einer erfindungsgemäßen Zusammensetzung die Summe der verschiedenen organischen Flüssigsalze) zwischen 1000:1 und 1:1. In anderen Worten, das Gewichtsverhältnis Matrixpolymer zu organischem Flüssigsalz liegt zwischen pro 1000 Gewichtsanteile Matrixpolymer ein Gewichtsanteil organischem Flüssigsalz (1000:1) und pro 1 Gewichtsanteil Matrixpolymer 1 Gewichtsanteile organischem Flüssigsalz.

In einer bevorzugten Ausführungsform beträgt das Gewichtsverhältnis zwischen Matrixpolymer und organischen Flüssigsalz zwischen 1000:1 und 2:1, mehr bevorzugt zwischen 1000:1 und 5:1 und noch mehr bevorzugt zwischen 100:1 und 5:1, insbesondere zwischen 100:1 und 10:1, z. B. zwischen 65:1 und 15:1.

Der Mengenanteil organischen Flüssigsalzes ist bevorzugt geringer als der Mengenanteil des elektrisch leitfähigen Partikels, z. B. um einen Faktor zwischen 1:70 und 1:5.

Bei Verwendung mindestens einem elektrisch leitfähigen Partikel in ausreichender Menge für eine Perkolation innerhalb einer Polymermatrix und zusätzlichem Zusatz zumindest eines organischen Flüssigsalzes bleibt in einer erfindungsgemäßen Zusammensetzung ein elektrisch leitfähiges Netzwerk und somit eine elektrische Heizwirkung auch bei Dehnungen > 2 %, z. B. > 3 % und auch insbesondere bei Dehnungen > 5, 10, 20 oder 50% erhalten.

Vermutet wird ein positives Zusammenwirken der Bildung eines Perkolationsnetzwerkes durch das elektrisch leitfähige Partikel und durch das organische Flüssigsalz, die das Perkolationsnetzwerk auch bei höheren Dehnungen aufrechterhält, in dem das mobile organische Flüssigsalz sich bei Dehnungen zwischen die anderen leitfähigen Partikeln bewegt.

Die erfindungsgemäße Zusammensetzung umfasst als weiteren Bestandteil mindestens einen Verdicker.

In einer bevorzugten Ausführungsform beträgt das Gewichtsverhältnis zwischen Matrixpolymer und Verdicker in einer erfindungsgemäßen Zusammensetzung zwischen 1000:1 und 10:1, mehr bevorzugt zwischen 1000:1 und 20:1 und noch mehr bevorzugt zwischen 1000:1 und 30:1.

In einer weiteren bevorzugten Ausführungsform umfasst eine erfindungsgemäße Zusammensetzung ein oder mehrere Matrixpolymere, elektrisch leitfähigen Partikel, ein oder mehrere organischem Flüssigsalze und einen Verdicker.

In einer weiteren bevorzugten Ausführungsform enthält eine erfindungsgemäße Zusammensetzung ein oder mehrere Matrixpolymere, elektrisch leitfähigen Partikel, ein oder mehrere organischem Flüssigsalze und einen Verdicker.

### Matrixpolymere

Bevorzugt handelt es sich bei den Matrixpolymeren in den erfindungsgemäßen Zusammensetzungen um folienbildende Matrixpolymere.

In einer bevorzugten Ausführungsform ist die Dicke einer Folie aus einer erfindungsgemäßen Zusammensetzung über die gesamte Fläche der Folio zwischen 0,5 mm und 2,5 mm wie z. B. zwischen 1 mm und 2 mm. Solche Foliendicken eignen sich z. B. für Sitzheizungen.

In einer weiteren bevorzugten Ausführungsform ist die Dicke einer Folie aus einer erfindungsgemäßen Zusammensetzung über die gesamte Fläche der Folio zwischen 5 mm und 10 mm wie z. B. zwischen 1 mm und 2 mm. Solche Foliendicken eignen sich z. B. für Sitzheizungen wobei die Folie aus einer erfindungsgemäßen Zusammensetzung z. B. hinter einem Schaum unter dem Oberflächenbezugsmaterial angebracht ist.

Typischerweise ist eine Folie aus einer erfindungsgemäßen Zusammensetzung nicht größer als 10 mm um noch ein schnelles Aufheizen zu ermöglichen.

Als Matrixpolymere, bevorzugt folienbildendes Matrixpolymere, können vielfältige Polymersysteme eingesetzt werden. Bevorzugt sind hier wiederum Polymersysteme, die flexible Filme bilden, z. B. zur Beschichtung von Textilien. Dazu gehören in organischen Lösungsmittel gelöste Polymere, wässrigen Dispersionen von Polymeren und (teilweise) in Wasser gelöste Polymere.

Zu den in organischen Lösungsmittel gelösten Polymeren zählen z. B. in organischen Lösungsmittel gelöste Polyurethane wie Impranil ELH^{®}-Produkte der Fa. Bayer Material Science, lösemittelarme oder -freie Pastensysteme wie High Solid-Polyurethan-Systeme wie sie beispielsweise in der DE 10 2006 056 956 A1 und EP 1 059 379 B1 beschrieben werden, PVC-Plastisole oder Polyolefinplastisole.

Als Matrixpolymere, bevorzugt folienbildende Matrixpolymere, können weiterhin thermoplastische Polymere oder thermoplastische Elastomere oder Mischungen aus diesen eingesetzt werden, die über übliche Folienherstellungsverfahren wie Kalandrieren, Gießfolienextrusion, Blasfolienextrusion oder Extrusion aus einer Breitschlitzdüse, verarbeitet werden. Beispiele für solche Polymere sind thermoplastische Polyurethane, thermoplastische Polyolefine mit oder ohne elastomere Anteile oder PVC-Weichfolien. Weiterhin kann als Polymer auch ein elastomeres oder gummiartiges Polymer bzw. Mischungen hieraus als folienbildendes Element eingesetzt werden. Beispielhaft können ein- oder mehrkomponentige vernetzbare Silikonelastomersysteme eingesetzt werden.

Neben wässrigen Dispersionen können auch in Wasser gelöste oder teilweise in Wasser lösliche Polymere verwendet werden, wie Polyvinylalkohole, Polyacrylsäure und Polymethacrylsäuren, Polyacrylamide, Polyvinylpyrrolidon, Polyethylenglycole, Cellulosederivate wie Hydroxyethylcellulose, Carboxymethylcellulosen, Hydroxypropylmethylcellulose, Hydroxypropylcellulose, Ethylhydroxyethylcellulose, Stärken, Gelatine, Casein, Pektine, Guarkernmehl, Johannisbrotkernmehl, Carrageen, Alginate, Agar, Traganth, Gummi arabicum, Xanthan, Karaya, Tarakernmehl, Gellan.

Verwendet werden können auch Mischungen aus (teilweise) wasserlöslichen Polymeren und anderen wässrigen Dispersionen.

Zur Herstellung der erfindungsgemäßen Zusammensetzungen werden bevorzugt wässrige Polyurethandispersionen auf anionischer oder kationischer Basis als auch neutral geladene Polyurethandispersionen eingesetzt. Beispielhaft (aber nicht ausschließend) können aber generell auf Wasser basierende Systeme wie Polyurethanharze, Acrylatharze, Styrolacrylate, Styrol/Butadien-Coplymerisate, Polyvinylester (wie Polyvinylacetate), Vinylester-Olefin-Copolymere (beispielsweise Vinylacetat/EthylenCopolymere), Vinylester-Acrylat-Copolymere oder Silikonkautschuke eingesetzt werden. Alle diese Systeme können jeweils allein oder in Abmischungen eingesetzt werden.

Bevorzugt sind in der Regel Dispersionen, die flexible Folien bilden bzw. die auch zur Beschichtung von Textilien eingesetzt werden können (Filme bilden).

Besonders bevorzugt bei der Herstellung der erfindungsgemäßen Zusammensetzungen sind wässrige, aliphatische Polyester-Polyurethandispersionen.

Mögliche Beispiele für wässrige Dispersionen sind z.b. Polyurethan- oder

Acrylatdispersionen:
- Polyether-Polyurethandispersionen
- Polyester-Polyurethandispersionen
- Polyestercarbonat-Polyurethandispersionen
- Polycarbonat-Polyurethandispersionen
- Acrylatdispersionen
- Styrol-Acrylatdisperisonen
- Latices
- Polyvinylacetatdispersionen
- Styrol-Butadien-Dispersionen
- Naturdispersionen (z.B. auf Basis Leinöl oder Rhizinusöl).

### Elektrisch leitfähige Partikel

Die elektrisch leitfähigen Partikel in der erfindungsgemäßen Zusammensetzung können aus den folgenden Gruppen als Einzelkomponente oder als Mischung ausgewählt werden:
1) Elektrisch leitfähige Körner auf Metallbasis, besonders bevorzugt auf Kupferbasis. Vorzugsweise liegen diese Körner dreidimensional verzweigten in der erfindungsgemäßen Zusammensetzung vor, mehr bevorzugt in dendritischer Form. In einer bevorzugten Ausführungsform ist die Oberfläche der Metallkörner vorteilhafterweise mit elektrisch leitfähigen insbesondere auch korrosionshemmenden Metallen teilweise oder vollständig beschichtet ist. Diese Metalle sind bevorzugt Edelmetalle wie Silber, Gold oder Platin oder auch Nichtedelmetalle wie Nickel. So können in einer besonders bevorzugten Form, die elektrisch leitfähigen Partikel Körner auf Basis von Kupfer, die oberflächlich mit Nickel oder Silber beschichtet sind, verwendet werden. Bevorzugt sind mit Silber beschichtete Kupferkörner. Generell sollte der Sauterdurchmesser dieser Körner nicht größer als 100 µm sein. Typischerweise ist die minimale Ausdehnung dieser sphärischen Partikel in allen drei Dimensionen 1 µm oder mehr. Bevorzugt liegt dabei der Partikeldurchmesser von mindestens 90% aller Partikel (D₉₀) bei maximal 75 µm, besonders bevorzugt bei maximal 50 µm wie z. B. zwischen 1 µm und 50 µm oder sogar zwischen 30 µm und 40 µm. Besonders bevorzugt liegt der D₁₀₀ Wert bei allen D₉₀ Werten unter 100 µm, ganz besonders bevorzugt ist der D₁₀₀ Wert identisch mit dem D₉₀ Wert.
2) Partikel auf der Basis von Glas, Kunststoff (abreagierte Polymere ohne reaktive Gruppen) Keramik, Metallkeramik, Legierungen, Mineralen, Gesteinen etc., die entweder selbst elektrisch leitend sind oder durch eine geeignete Beschichtung aus Edelmetallen oder Nichtedelmetallen leitfähig werden bzw. die Leitfähigkeit optimiert wird, elektrisch leitfähiger Ruße, Graphen oder Kohlefasern.
   Partikel auf der Basis von Glas, Keramik, Metallkeramik, Legierungen, Mineralen, Gesteinen etc., die entweder selbst elektrisch leitend sind oder durch eine geeignete Beschichtung aus Edelmetallen (bevorzugt Silber) oder Nichtedelmetalle (bevorzugt Nickel), wie oben beschrieben, leitfähig werden bzw. die Leitfähigkeit optimiert wird. Typischerweise sollte der Sauterdurchmesser der Körner nicht größer als 100 µm sein. Typischerweise ist die minimale Ausdehnung dieser sphärischen Partikel in allen drei Dimensionen 1 µm oder mehr. Bevorzugt liegt dabei der Partikeldurchmesser von mindestens 90% (oder mindestens 95%, oder mindestens 99%, idealerweise 100%) aller Partikel bei maximal 75 µm, besonders bevorzugt bei maximal 50 µm, ganz besonders bevorzugt liegt der Partikeldurchmesser zwischen 1 µm und maximal 25 µm wie z. B. zwischen 5 µm und 10 µm oder zwischen 10 µm und 20 µm. Besonders bevorzugt liegt der D₁₀₀ Wert bei allen D₉₀ Werten unter 100 µm, ganz besonders bevorzugt ist der D₁₀₀ Wert identisch mit dem D₉₀ Wert. Wenn es sich bei den elektrisch leitfähige Partikel um Fasern handelt, sollte der Partikeldurchmesser dieser Fasern (in zwei der drei Dimensionen) typischerweise nicht größer als 50 µm sein. Typischerweise ist die Länge mindestens um einen Faktor 2, bevorzugt mindestens um einen Faktor 3, mehr bevorzugt mindestens um einen Faktor 5, größer sein als in einer der beiden übrigen Dimensionen. Bevorzugt liegt der Faserdurchmesser von mindestens 90% (D₉₀) aller Fasern bei maximal 50 µm, besonders bevorzugt bei maximal 30 µm, ganz besonders bevorzugt bei maximal 20 µm wie z. B. zwischen 10 µm und 20 µm bei metallbeschichteten Fasern. Besonders bevorzugt liegt der D₁₀₀ Wert bei allen D₉₀ Werten unter 100 µm, ganz besonders bevorzugt ist der D₁₀₀ Wert identisch mit dem D₉₀ Wert. Bevorzugt beträgt die Faserlänge bei metallbeschichteten Fasern mindestens 100 µm, z. B. liegt die Länge zwischen 100 µm und 400 µm z. B. zwischen 100 µm und 150 µm. Bei Carbo-Nanotubes liegt der Faserdurchmesser bevorzugt bei maximal 50 nm z. B. zwischen 5 nm und 30 nm. Bevorzugt beträgt die Faserlänge bei Carbo-Nanotubes mindestens 500 nm z. B. zwischen 700 nm und 5 µm.
3) Elektrisch leitfähige Metallpulver oder elektrisch leitfähiger Pulver auf Basis elektrisch leitfähiger Polymere mit einem Sauterdurchmesser der Körner kleiner als 900 nm. Typischerweise ist die minimale Ausdehnung dieser sphärischen Partikel in allen drei Dimensionen 900 nm oder kleiner. Bevorzugt liegt dabei der Partikeldurchmesser von mindestens 90% aller Partikel (D₉₀) bei maximal 900 nm, besonders bevorzugt zwischen 1 nm und 900 nm oder zwischen 1 nm und 40 µm. Besonders bevorzugt liegt der D₁₀₀ Wert bei allen D₉₀ Werten unter 100 µm, ganz besonders bevorzugt ist der D₁₀₀ Wert identisch mit dem D₉₀ Wert..

In einer bevorzugten Ausführungsform umfasst eine erfindungsgemäße Zusammensetzung elektrisch leitfähige Partikel mit einer sphärischen bzw. kugelförmigen Gestalt, bei denen es sich um oberflächlich versilberte Hohlkugeln oder Vollkugeln aus Glas oder Plastik, besonders bevorzugt aus Glas, handelt. Besonders bevorzugt haben mindestens 90% der eingesetzten sphärischen Partikel (D₉₀) einen Partikeldurchmesser von maximal 20 µm. Besonders bevorzugt liegt der D₁₀₀ Wert bei allen Werten unter 100 µm, ganz besonders bevorzugt ist der D₁₀₀ Wert identisch mit dem D₉₀ Wert. Bevorzugt liegt der Gewichtsanteil des Silbers bei diesen sphärischen Partikeln zwischen 15 Gew.-% und 50 Gew.-% bezogen auf die Gesamtmasse der sphärischen Partikel. In einer besonders bevorzugten Ausführungsform umfasst eine erfindungsgemäßen Zusammensetzung als elektrisch leitfähige Partikel mit einer sphärischen bzw. kugelförmigen Gestalt, bei denen es sich um oberflächlich versilberte Glashohlkugeln mit einem Silbergehalt zwischen 20 Gew.-% und 40 Gew.-% und einem Partikeldurchmesser zwischen 5 und 25 µm handelt. In einer weiteren besonders bevorzugten Ausführungsform enthält eine erfindungsgemäßen Zusammensetzung als elektrisch leitfähige Partikel nur Partikel mit einer sphärischen bzw. kugelförmigen Gestalt, bei denen es sich um oberflächlich versilberte Glashohlkugeln mit einem Silbergehalt zwischen 20 Gew.-% und 40 Gew.-% und einem Partikeldurchmesser zwischen 5 und 25 µm handelt.

In einer weiteren besonders bevorzugten Ausführungsform umfasst eine erfindungsgemäße Zusammensetzung elektrisch leitfähige Partikel mit einer Fasergestalt, bei denen es sich um oberflächlich versilberte Glasfasern handelt. Bevorzugt liegt dabei der Partikeldurchmesser in zwei der drei Dimensionen von mindestens 90 aller Fasern (D₉₀) zwischen 10 µm und 50 µm. Besonders bevorzugt liegt der D₁₀₀ Wert bei allen Werten unter 100 µm, ganz besonders bevorzugt ist der D₁₀₀ Wert identisch mit dem D₉₀ Wert. Weiterhin beträgt die Länge in der dritten Dimension mindestens 100 µm z. B. zwischen 100 µm und 400 µm. Bevorzugt liegt der Gewichtsanteil des Silbers bei diesen Fasern zwischen 15 Gew.-% und 50 Gew.-% bezogen auf die Gesamtmasse der Fasern.

In einer weiteren besonders bevorzugten Ausführungsform umfasst eine erfindungsgemäße Zusammensetzung elektrisch leitfähige Partikel mit einer Fasergestalt, bei denen es sich um oberflächlich versilberte Glasfasern handelt. Bevorzugt liegt dabei der Faserdurchmesser in zwei der drei Dimensionen von mindestens 90% aller Fasern (D₉₀) zwischen 10 µm und 50 µm. Besonders bevorzugt liegt der D₁₀₀ Wert bei allen Werten unter 100 µm, ganz besonders bevorzugt ist der D₁₀₀ Wert identisch mit dem D₉₀ Wert. Weiterhin beträgt die Länge in der dritten Dimension mindestens 100 µm z. B. zwischen 100 µm und 400 µm. Bevorzugt liegt der Gewichtsanteil des Silbers bei diesen Fasern zwischen 15 Gew.-% und 50 Gew.-% bezogen auf die Gesamtmasse der Fasern.

In einer weiteren bevorzugten Ausführungsform umfasst eine erfindungsgemäße Zusammensetzung elektrisch leitfähige Partikel mit einer Fasergestalt, bei denen es sich um Carbo-Nanotubes handelt. Besonders bevorzugt werden mehrwändige Carbo-Nanotubes (MWCNTs) mit einem Durchmesser zwischen 5 nm und 20 nm und einer Länge zwischen 1 µm und 10 µm eingesetzt.

Alle vorstehend angeführten elektrisch leitfähigen metallhaltigen Partikel sind beispielsweise unter dem Handelsnamen "Conduct-O-Fil" von der Fa. Potters Industries Inc. Valley Forge, PA USA zu beziehen. Mehrwändige Carbo-Nanotubes sind beispielsweise über die Fa. Nanocyl beziehbar. Als elektrisch leitfähige Metallpulver können prinzipiell alle elektrisch leitfähigen Metalle eingesetzt werden. Bevorzugt sind Pulver auf Basis von Zink oder Kupfer oder besonders bevorzugt auch auf Basis von Silber, Platin oder Gold. Insbesondere bevorzugt sind auch Kupferpulver mit einer kugelförmigen oder flächigen Gestalt und besonders bevorzugt mit einer versilberten oder vernickelten Oberfläche. Als elektrisch leitfähige Ruße oder Kohlefasern werden insbesondere auch Leitfähigkeitsruße eingesetzt (wie Ensaco Carbon Black 350 G, Ensaco Carbon Black 250 G, Printex XE 2, Printex XE 2B, Hiblack40 B2, Hiblack420 B).

Als elektrisch leitfähige Pulver auf Basis elektrisch leitfähiger Polymere können elektrisch leitfähige Polymere wie Polythiophene, Polypyrrole, Polyacetylene, Polythiophen/Polystyrolsulfonat-Mischungen (z.B. Baytron P, Poly(3,4 (ethylendioxy)-thiophen)/Polystyrolsulfonat-Mischung) etc. eingesetzt werden.

### Organisches Flüssigsalz

Wie bereits erwähnt, hat es sich als vorteilhaft gezeigt, wenn die erfindungsgemäße Zusammensetzung neben mindestens einem elektrisch leitfähigen Partikel noch mindestens ein organisches Flüssigsalz enthält, das bei 25 °C und 1000 hPa im flüssigen Aggregatzustand vorkommt (flüssiger Aggregatzustand = Zustand zwischen Schmelz- und Siedepunkt eines Stoffes).

In einer bevorzugten Ausführungsform besteht ein organisches Flüssigsalz aus einem Salz, das bei 1000 hPa mindestens zwischen 25 °C und 100°C flüssig ist und mindestens ein organisches Ion besitzt. Bevorzugt handelt es sich bei dem organischen Ion um ein organisches Kation wie ein gegebenenfalls substituiertes aromatisches Kation mit 5, 6, 9, 10 oder 14 Kohlenstoffringatomen, wobei ein, zwei, drei oder vier Kohlenstoffringatome durch ein Schwefel, Sauerstoff und/oder Stickstoffatom ausgetauscht sein können, oder wie ein gegebenenfalls substituiertes aliphatisches C₁-C₁₂-Aminoalkyl.

Ein organisches Ion ist ein Ion, dass - bis auf die elementare Form des Kohlenstoffs, wasserstofffreier Chalkogenide, Kohlensäure, Carbonate, Carbide, Cyanide, Cyanate und Thiocyanate - auf Kohlenstoff basiert und weitere funktionelle Gruppen wie Alkoholgruppen, Aminogruppen, Thiogruppen, Oxogruppen, Halogene etc. enthalten kann.

In einer besonders bevorzugten Ausführungsform besteht ein organisches Flüssigsalz aus einem Salz worin das Kation ausgewählt ist aus der Gruppe bestehend aus Imidazolinium-, Pyridinium-, Pyrrolidinium-, Guanidinium-, Uronium-, Thiouronium-, Piperidinium-, Morpholinium-, Phosphonium-, oder C₁-C₆-Alkylammonium-Kation; jeweils mit ein, zwei oder drei Gruppen unabhängig voneinander ausgewählt aus Amino-, C₁-C₆-Hydroxyalkyl-, Hydroxy-, Halogen-, C₁-C₆-Halogenalkyl-, C₁-C₆-Alkyl- substituiertes Imidazolinium-, Pyridinium-, Pyrrolidinium-, Guanidinium-, Uronium-, Thiouronium-, Piperidinium-, Morpholinium-, Phosphonium-, oder Alkylammonium-Kation.

In einer weiteren besonders bevorzugten Ausführungsform besteht ein organisches Flüssigsalz aus einem Salz worin das Kation ausgewählt ist aus der Gruppe bestehend aus Imidazolinium-, Pyridinium-, Pyrrolidinium-, Guanidinium-, Uronium-, Thiouronium-, Piperidinium-, Morpholinium-, Phosphonium-, oder Alkylammonium-Kation; mit ein, zwei oder drei Gruppen unabhängig voneinander ausgewählt aus Amino-, C₁-C₆-Hydroxyalkyl-, Hydroxy-, Halogen-, C₁-C₆-Halogenalkyl-, C₁-C₆-Alkyl- substituiertes Imidazolinium-, Pyridinium-, Pyrrolidinium-, Guanidinium-, Uronium-, Thiouronium-, Piperidinium-, Morpholinium-, Phosphonium-, oder Alkylammonium-Kation und worin das Anion ausgewählt ist aus der Gruppe bestehend aus Sulfat, Phosphat, Borat, Cyanamid, Borhalogenide wie Bortetrafluorid, Halogenide (Chlorid, Bromid, Iodid), Phosphorhalogenide wie Phosphorhexafluorid, Nitrat, Halogenate wie Chlorat, Trifluormethansulfonat, Methansulfonat, p-Toluolsulfonat, Thiocyanat,

Alkylsulfate, Triflouracetate oder Trifluormethansulfonimide, bevorzugt sind Chlorid, Bromid, Iodid, mehr bevorzugt sind Sulfat, Borat oder Cyanamid.

Ganz besonders bevorzugt sind organische Flüssigsalze, die als Kation ein Imidazolinium, Pyridinium C₁-C₆-Alkylammonium, ein, zwei oder dreifach C₁-C₆-alkylierte Imidazolinium- oder Pyridiniumkationen enthalten und als Anion ein Chlorid, Bromid, Iodid, Sulfat, Phosphat, Cyanamid enthalten, besonders bevorzugt Sulfat oder Cyanamid enthalten wie beispielsweise 1-Ethyl-3-Methyl-Imidazolinium Ethylsulfat, 1-Ethyl-3-Methylimidazolium Dicyanamid, Tris-(2-Hydroxyethyl)-Methylammonium Methylsulfat oder 1-Butyl-4-Methylpyridinium- Tetrafluoroborat.

### Verdicker

In einer bevorzugten Ausführungsform enthält eine erfindungsgemäße Zusammensetzung auch einen polymeren Verdicker. Ein Verdicker kann nicht nur vorwiegend zur Verdickung der polymeren Dispersion benötigt werden sondern auch überraschenderweise als Verträglichkeitsvermittler für das System aus organischem Salz und wässriger Polymerdispersion während der Herstellung der erfindungsgemäßen Zusammensitzung dient.

Es können neben rein durch Quellung wirkenden Verdickern bevorzugt assoziativ wirksame Verdicker eingesetzt werden, die ähnlich Tensiden hydrophobe und hydrophile Bestandteile besitzen wie hydrophob modifizierte Polyacrylate, Celluloseether, Polyacrylamide oder Polyether sowie besonders bevorzugt assoziative Polyurethan- und Acrylat-Verdicker. Der Einsatz der Verdicker erfolgt bevorzugt in einer vorverdünnten Form in Wasser.

Ein polymerer Verdicker im Sinne der vorliegenden Erfindung erhöht im Gegensatz zu einem wässriges folienbildenden Polymer die Viskosität der Reaktionsmasse zur Herstellung der erfindungsgemäßen Zusammensetzung deutlich. Dem Fachmann bekannte und vorzugsweise einsetzbare Verdicker sind z. B. E: assoziativ wirksame Polyurethanverdicker (beispielsweise Borchigel 0625, Borchers) oder assoziativ wirksame Acrylatverdicker (beispielsweise Lyoprint TFC-01, Huntsman).

In einer bevorzugten Ausführungsform beträgt der Anteil an Verdicker zwischen 0 Gew.-% und 10 Gew.-%, bevorzugt zwischen 0 Gew.-% und 3 Gew.-% bezogen auf das Gesamtgewicht der erfindungsgemäßen Zusammensetzung.

In einer besonders bevorzugten Ausführungsform beträgt der Anteil an Verdicker zwischen 0,2 Gew.-% und 2 Gew.-% bezogen auf das Gesamtgewicht der erfindungsgemäßen Zusammensetzung.

### Weitere Bestandteile

Zusätzlich können weitere Bestandteile Teil einer erfindungsgemäßen Zusammensetzung sein. Dies sind z. B. Stoffe zur Einstellung des pH-Wertes, Flammschutzmittel (bevorzugt zwischen 5 Gew.-% und 35 Gew.-% bezogen auf das Gesamtgewicht der erfindungsgemäßen Zusammensetzung), Pigmente und Einfärbemittel, Stabilisatoren gegen oxidativen, thermischen, hydrolytischen, strahlungsinduzierten oder mikrobiellen Abbau oder Alterung (Alterungsschutzmittel wie Antioxidantien, gehinderte Amine oder UV-Absorber etc., Hydrolyseschutzmittel, biozid wirksame Mittel), Konservierungsmittel, Mattierungsmittel, Entschäumungshilfen, Verlaufshilfsmittel, Dispergierhilfsmittel, Weichmacher, Vernetzungshilfsmittel, Gleitmittel, Rheologiehilfsmittel, Trennmittel, Verstärkungsstoffe, Füllstoffe, Katalysatoren, Hydrophobierungsmittel, oder Treibmittel eingesetzt werden.

Als Flammschutzmittel werden insbesondere nicht halogenhaltige Flammschutzmittel eingesetzt, wobei der Einsatz halogenhaltiger Flammschutzmittel nicht ausgeschlossen ist. So ist auch der Einsatz von Brom- oder Chlor-haltigen organischen Verbindungen möglich, aber nicht bevorzugt, oder auch Kombinationen dieser Verbindungen mit Antimon-haltigen Verbindungen. Besonders geeignet sind stickstoffhaltige Flammschutzmittel wie Melamin- oder Guanidinderivate oder auch phosphorhaltige Flammschutzmittel wie Organophosphorverbindungen oder organische Verbindungen, die Stickstoff- und Phosphor enthalten. Insbesondere vorteilhaft ist der Einsatz von Flammschutzmitteln auf Basis von Metallhydroxiden wie Magnesiumhydroxid oder Aluminiumhydroxid oder auch der Einsatz von anorganischen borhaltigen oder ammoniumhaltigen Verbindungen. Andere mögliche anorganische Verbindungen enthalten beispielsweise Antimon, Molybdän oder elementaren Phosphor. Vorteilhaft kann auch der Einsatz von expandierbaren Graphit oder nanoskaligen Silikatderivaten als Flammschutzmittel sein.

Der Einsatz von Mischungen von Flammschutzmitteln kann insbesondere deutlich vorteilhaftere brandhemmende Eigenschaften erzeugen als es durch eine ausschließlich Partikel-Wirkung von einzelnen Flammschutzmitteln zu erwarten wäre (synergistischer Effekt).

Bevorzugt beträgt der Anteil eines Flammschutzmittel bzw. der Summe aller in einer erfindungsgemäßen Zusammensetzung befindlichen Flammschutzmittel zwischen 5 Gew.-% und 35 Gew.-% bezogen auf das Gesamtgewicht der erfindungsgemäßen Zusammensetzung, mehr bevorzugt zwischen 5 Gew.-% und 20 Gew.-%.

Entsprechend richtet sich eine weitere bevorzugte Ausführungsform auf eine Zusammensetzung umfassend mindestens ein Matrixpolymer, elektrisch leitfähige Partikel und mindestens ein organisches Flüssigsalz wobei das Gewichtsverhältnis zwischen dem mindestens einem Matrixpolymer und elektrisch leitfähigen Partikeln zwischen 4:1 und 1:5 liegt; und das Gewichtsverhältnis zwischen Matrixpolymer und organischem Flüssigsalz zwischen 1000:1 und 1:1 liegt; und die Summe der Gewichte aus Matrixpolymer, elektrisch leitfähigen Partikeln und organischem Flüssigsalz mindestens 65 Gew.-% bezogen auf das Gesamtgewicht der Zusammensetzung beträgt und ein Flammschutzmittel wobei das Gewicht des Flammschutzmittels bezogen auf das Gesamtgewicht der Zusammensetzung zwischen 5 Gew.-% und 35 Gew.-% liegt.

Eine weitre Ausführungsform richtet sich auf eine Zusammensetzung umfassend mindestens ein Matrixpolymer, elektrisch leitfähige Partikel und mindestens ein organisches Flüssigsalz wobei das Gewichtsverhältnis zwischen dem mindestens einem Matrixpolymer und elektrisch leitfähigen Partikeln zwischen 4:1 und 1:5 liegt; und das Gewichtsverhältnis zwischen Matrixpolymer und organischem Flüssigsalz zwischen 1000:1 und 1:1 liegt; und die Summe der Gewichte aus Matrixpolymer, elektrisch leitfähigen Partikeln und organischem Flüssigsalz mindestens 80 Gew.-% bezogen auf das Gesamtgewicht der Zusammensetzung beträgt und ein Flammschutzmittel wobei das Gewicht des Flammschutzmittels bezogen auf das Gesamtgewicht der Zusammensetzung zwischen 5 Gew.-% und 20 Gew.-% liegt.

### Weitere Verwendungen

Folgende weitere Verwendungen der erfindungsgemäßen Zusammensetzung nach Applikation auf einen Untergrund sind möglich:
- Verwendung zur elektromagnetischen Abschirmung;
- Verwendung als elektrisch leitfähige Schicht oder Spur zur Verwendung oder zur Kontaktierung von elektronischen Bauteilen (wie LEDs, RFID-Chips, Kondensatoren, Mikroprozessoren etc.) auf flexiblen Untergründen (wie Textilien, Folien, Kunstleder etc.);
- Verwendung als elektrisch leitfähige Komponente in flexiblen Photovoltaikfolien;
- Verwendung als elektrisch leitfähige Komponente in flexiblen (resistiven, induktiven oder kapazitiven) Displays, Schaltern, Reglern etc. ;
- Verwendung als elektrisch leitfähige Komponente in flexiblen OLED-Anwendungen;
- Verwendung als Paste zur Darstellung elektronischer Bauteile wie Kondensatoren auf einem flexiblen Untergrund;
- Verwendung als elektrisch leitfähige Schicht in Drucktüchern, insbesondere für Drucktücher, die für den Digitaldruck verwendet werden;
- Verwendung als elektrisch leitfähige Komponente in einer Polymermatrix als Messfühler für eine mechanische Belastung. Abhängig von der Belastung bzw. der Dehnung der elektrisch leitfähigen Komponente wird ein unterschiedlicher elektrischer Widerstand erhalten, der einen Rückschluss auf die Belastung bzw. Dehnung der umgebenden Matrix zulässt. So kann beispielsweise die mechanische Belastung von Bauteilen, die hohen Belastungen ausgesetzt sind, verfolgt werden (beispielsweise Flügel von Windrädern);
- Verwendung als elektrisch leitfähige Komponente, um die dynamische Belastung von polymeren Bauteilen wie Keilriemen, Transportbänder oder Reifen durch direkten Kontakt oder elektromagnetische Induktion zu verfolgen;
- Verwendung als elektrisch leitfähige Komponente in Funktionsfolien, die heizen oder kühlen können;
- Verwendung als flexible und dehnfähige Heizfolie im Bau- Wohn und Industriebereich;
   Verwendung als flexible und dehnfähige Heizfolie im Bekleidungsbereich;
- Verwendung zur Beheizung von Sportbekleidung oder Sportgeräten;
- Verwendung als elektrisch leitfähige Komponente, um elektronische Bauteile gegen elektromagnetische Strahlung abzuschirmen und /oder zu beheizen (Verwendung im Militär- und Flugzeug- und Weltraumbereich);
- Verwendung als elektrisch leitfähige flexible Komponente in flexiblen Sensoren oder Diagnosegeräten;
- Verwendung als elektrisch leitfähige flexible Komponente in flexiblen Batterien.

Die beschriebenen Verwendungen beziehen sich bevorzugt auf flexible Anwendungen. Eine Verwendung in jeweils unflexiblen Anwendungen ist ebenso möglich.

Ebenso ist es möglich, die erfindungsgemäße Zusammensetzung als Flächenheizung oder aber auch bei direktem Kontakt als Raumheizung zu verwenden. Zudem kann die Zusammensetzung auch als elektrische Leiterbahn verwendet werden.

Die Beispiele 12 und 21 - 23 enthalten Verdicker als Verträglichkeitsvermittler und führen zu Massen mit einem homogenen Erscheinungsbild.

### Verfahren

Die Herstellung der erfindungsgemäßen Zusammensetzung erfolgt nach den der fachkundigen Person bekannten Verfahren. Es hat sich allerdings als vorteilhaft gezeigt, wenn folgende Verfahrensschritte verwendet werden, wenn als folienbildendes Matrixpolymer eine wässrige Dispersion verwendet wird:
- Mischen wenigstens einer wässrigen Matrixpolymerdispersion, bevorzugt einer Matrixpolymerdispersion, mit elektrisch leitfähigen Partikeln, bevorzugt mit elektrisch leitfähigen Partikeln der gleichen Art, mit wenigstens einem Verdicker und optional Wasser und
- Hinzufügen von mindestens einem organischem Flüssigsalz, bevorzugt einem organischen Flüssigsalz, und
- optional Hinzufügen von wenigstens eines Verdickers, und
- optional Hinzufügen von weiteren Zusatzstoffen, bevorzugt mindestens eines Flammschutzmittels und/oder mindestens eines Vernetzers, und
- Entfernen von Wasser, bevorzugt entfernen von mindestens 90% Wasser, mehr bevorzugt mindestens 95% Wasser, besonders bevorzugt mindesten 98% Wasser.

In einer bevorzugten Ausführungsform ist es von Vorteil im ersten Verfahrensschritt das wenigstens eine Matrixpolymer, bevorzugt eine Matrixpolymerdispersion, mit wenigstens einem Verdicker und optional mit Wasser zu mischen, um eine vorteilhafte Viskosität zu erzielen, damit die elektrisch leitfähigen Partikel, entweder alleine oder in Kombination mit weiteren elektrisch leitfähigen Partikeln einer anderen Art, entsprechend eingemischt werden können, d.h. damit geeignete Scherkräfte im System vorhanden sind.

Zur Einstellung der Bearbeitungsviskosität nach dem Einmischen bzw. Hinzufügen von elektrisch leitfähigen Partikel können anschließend optional noch Verdicker und / oder Wasser hinzugefügt werden. Anschließend wird organisches Flüssigsalz und optional Verdicker und optional weitere Zusatzstoffe, wie obig beschrieben, hinzugefügt und die vollständige Zusammensetzung durch geeignete Rührprozesse vermischt bzw. homogenisiert.

In einer bevorzugten Ausführungsform wird in einem erfindungsgemäßen Verfahren zur Herstellung einer erfindungsgemäßen Zusammensetzung ein Vernetzer eingesetzt.

Bevorzugt wird als Vernetzer ein Stoff mit freien oder reversibel blockierten Isocyanatgruppen eingesetzt. Diese können beispielsweise hydrophob oder hydrophil modifizierte Isocyanatdimere, -oligomere oder Präpolymere, Carbodiimide auf Basis von Dimeren oder Präpolymeren oder Dimere, Oligomere oder Präpolymere mit Ketoximblockierten Isocyanatgruppen sein oder Uretdion-verknüpfte Dimere oder Präpolymere.

Alternativ kann in einer anderen bevorzugten Ausführungsart auch eine Vernetzung der polymeren Folie über andere chemische Vernetzungen (beispielsweise unter Zuhilfenahme von Peroxiden), elektromagnetischer Strahlung oder andere vernetzende Systeme (UV-Licht-Vernetzung, Elektronenstrahlvernetzung) stattfinden. Durch die Einstellung einer definierten Vernetzung lässt sich die Widerstandsfähigkeit der elektrisch leitfähigen Folie gegen Dehnungen optimieren.

In einer bevorzugten Ausführungsform umfasst ein erfindungsgemäßes Verfahren die Schritte
- Mischen wenigstens einer wässrigen Polymerdispersion, bevorzugt einer Polymerdispersion, mit elektrisch leitfähigen Partikeln, bevorzugt mit elektrisch leitfähigen Partikeln der gleichen Art, mit wenigstens einem Verdicker und optional Wasser und
- Hinzufügen von mindestens einem organischem Flüssigsalz, bevorzugt einem organischen Flüssigsalz, und
- optional Hinzufügen von wenigstens eines Verdickers, und
- Hinzufügen von mindestens einem Vernetzer, bevorzugt einem Vernetzer;
- Optional Hinzufügen von weiteren Zusatzstoffen, bevorzugt mindestens eines Flammschutzmittels, und
- Entfernen von Wasser, bevorzugt entfernen von mindestens 90% Wasser, mehr bevorzugt mindestens 95% Wasser, besonders bevorzugt mindesten 98% Wasser.

In einer bevorzugten Ausführungsform beträgt das Gewichtsverhältnis zwischen Matrixpolymer und Vernetzer in einem erfindungsgemäßen Verfahren zur Herstellung einer erfindungsgemäßen Zusammensetzung zwischen 10000:1 und 3:1, mehr bevorzugt zwischen 1000:1 und 5:1 und noch mehr bevorzugt zwischen 500:1 und 10:1.

In einer erfindungsgemäßen Zusammensetzung wird die Matrix aus dem Reaktionsprodukt des Matrixpolymers und dem Vernetzer gebildet. Somit ist der Gewichtsanteil der Polymermatrix in einer erfindungsgemäßen Zusammensetzung im Sinn der vorliegenden Erfindung die Summe aus eingesetztem Matrixpolymer und Vernetzer (abzüglich der ggf. je nach Reaktionsart der aktiven Polymer- und Vernetzerguppen anfallenden Nebenprodukte wie z. B. Wasser).

Ein weiterer Aspekt der vorliegenden Erfindung bezieht sich auf eine Polymerfolie hergestellt durch ein Verfahren umfassend die Schritte
- Mischen wenigstens einer wässrigen Matrixpolymerdispersion, bevorzugt einer Matrixpolymerdispersion, mit elektrisch leitfähigen Partikeln, bevorzugt mit elektrisch leitfähigen Partikeln der gleichen Art, mit wenigstens einem Verdicker und optional Wasser und
- Hinzufügen von mindestens einem organischem Flüssigsalz, bevorzugt einem organischen Flüssigsalz, und
- optional Hinzufügen von wenigstens eines Verdickers, und
- optional Hinzufügen von weiteren Zusatzstoffen, bevorzugt mindestens eines Flammschutzmittels und/oder mindestens eines Vernetzers, und
- Entfernen von Wasser, bevorzugt entfernen von mindestens 90% Wasser, mehr bevorzugt mindestens 95% Wasser, besonders bevorzugt mindesten 98% Wasser.

Die erfindungsgemäße Zusammensetzung kann zur Herstellung eines dehnfähigen elektrisch leitfähigen Gebildes insbesondere Flächengebildes verwendet werden. So kann beispielsweise eine elektrisch leitfähige Folie hergestellt werden, die auch unter Dehnung weiterhin elektrisch leitfähig ist.

In einer bevorzugten Ausführungsform wird die Zusammensetzung als Beschichtungsmaterial verwendet, welches auf beliebige flächige Gebilde aufgetragen und nachfolgend ausgehärtet wird (Film) Nach dem Aushärten oder Trocknen des Beschichtungsmaterials wird eine dehnfähige elektrisch leitfähige Beschichtung erhalten. Besonders bevorzugt werden so flexible, flächige Träger, insbesondere flächige textile Träger, beschichtet. Diese Träger können selbst elektrisch leitfähig sein, bevorzugt sind sie allerdings selbst elektrisch nicht leitfähig.

Das Verhalten der erfindungsgemäßen Zusammensetzung als Beschichtung ist umso besser, je besser die Beschichtungsqualität ist. D.h. defekte in der Beschichtung oder ein partiell zu tiefes Einsinken der Beschichtungsmasse in die zu beschichtende Oberfläche sind möglichst zu vermeiden. Vorteilhaft kann es sein wenn der Untergrund, beispielsweise auf textiler Basis, durch eine Vorbeschichtung geglättet wird bzw. Unregelmäßigkeiten egalisiert werden. Diese Vorbeschichtung kann beispielsweise durch die erfindungsgemäße Zusammensetzung selbst oder aus ökonomischen Gründen durch die erfindungsgemäße Zusammensetzung ohne die leitfähigen Füllstoffe erfolgen. Vorteilhaft kann es zudem sein, vor der Beschichtung mit der erfindungsgemäßen Zusammensetzung eine zusätzliche Folie oder ein Vlies auf den zu beschichtenden Untergrund durch eine Kaschierung aufzubringen, so dass der zu beschichtende Untergrund geglättet und somit die Beschichtungsqualität verbessert wird. Zudem kann es vorteilhaft sein, die erfindungsgemäße Zusammensetzung auf ein dünnes Textil, beispielsweise ein Vlies mit glatter Oberfläche oder eine glatte Folie aufzubringen und auszuhärten, so dass eine optimale Beschichtungsqualität erreicht wird. Dieser optimale Verbund kann dann auf die gewünschte Oberfläche aufgebracht werden. Vorteilhaft kann es auch sein, die zu beschichtende Oberfläche vor der Beschichtung zu beflocken bzw. von vornherein eine beflockte Oberfläche einzusetzen.

In einer bevorzugten Ausführungsform sind die vorbeschichteten Textile, Vliese oder Folien besonders dehnfähig und elastisch.

Die Struktur der aufgebrachten leitfähigen Schicht kann zweidimensional flächig sein oder in definierten Mustern, beispielsweise (kariert, rautenförmig, wellenförmig) aufgebracht werden. Möglich ist auch das Aufbringen von parallelen Linien. Prinzipiell können beliebige Muster aus elektrisch leitfähiger Beschichtungsmasse generiert werden, so dass beispielsweise für elektrische Heizanwendungen definierte Bereiche mit definierter Heizwirkung erzeugt werden können. Vorteilhaft kann das Aufbringen definierter Muster bzw. elektrischer Leiterbahnen auch zur Kontaktierung elektronischer Bauteile auf flexiblen Materialien sein.

Die elektrisch leitfähige Beschichtung lässt sich konstruktiv sehr vielfältig einsetzen. So kann in einer mehrschichtigen Konstruktion wie in einem Kunstleder, die leitfähige Beschichtung zwischen und/oder auf allen Schichten angeordnet sein.

Vorteilhaft kann es sein, die elektrisch leitfähige Zusammensetzung auf einen separaten textilen Träger wie ein Gewebe, Gewirke, Gestrick oder Vlies bzw. auf eine dünne flexible polymere Folie in einer gewünschten Form aufzubringen. In einer bevorzugten Ausführung sind diese textilen oder polymeren Träger besonders elastisch und dehnfähig. Nach Aushärten der Beschichtungsmasse kann der beschichtete Träger dann entweder allein als funktionale elastische Folie oder textiler Träger verwendet werden oder mit einem anderen flexiblen oder unflexiblen Untergrund verbunden werden. So eine Verbindung kann beispielsweise über eine Kaschierung mittels druck- oder thermisch aktivierbaren Klebstoffen, über thermoplastische Klebe-Webs, über Klebstoffe auf wässriger Basis oder Lösungsmittelbasis, mit reaktiven ein- oder mehrkomponentigen bevorzugt lösungsmittelarmen oder -freien Klebstoffmassen, mit gelierenden polymeren Massen oder Klebstoffen auf Elastomerbasis hergestellt werden. Weitere Verbindungsmöglichkeiten sind beispielsweise Vernähen, Vernieten, verbinden mit Klammern oder reversible Verbindungen beispielsweise mit Kreppverschlüssen oder Reißverschlüssen.

Es kann auch vorteilhaft sein, eine auf einen Untergrund applizierte und ausgehärtete elektrisch leitfähige Zusammensetzung durch eine zusätzliche Polymerschicht, Folie, und/oder Textil abzudecken, um die elektrisch leitfähige Schicht vor äußeren Einflüssen zu schützen. So kann diese Schicht beispielsweise vor mechanischen Belastungen, wie Abriebbelastungen, vor Feuchtigkeit oder vor korrosiven Einflüssen geschützt werden.

Die elektrisch leitfähige Zusammensetzung kann auch auf oder innerhalb eines polymeren Gebildes eingesetzt werden, dabei bevorzugt nur auf einem Teil der Oberfläche bzw. in einem Teil des Volumens. Dieses kann beispielsweise dem Zwecke dienen, bestimmte Bereiche elektrisch zu kontaktieren. Beispielsweise kann der elektrisch leitfähige Bestandteil des polymeren Gebildes auch als Sensor dienen, der beispielsweise über elektromagnetische Induktion eine Überwachung insbesondere von dynamischen oder statischen Belastungen des Gebildes erlaubt. Solche Sensoren können auch zur Darstellung von auf der Oberfläche nicht sichtbaren kapazitiven Schaltern und Reglern genutzt werden.

Die verwendeten textilen Träger sind beispielsweise Gewebe, Gelege, Gewirke, Abstandsgewirke, Gestricke oder Vliese, Vliese, die senkrechte Polfäden enthalten oder auch textile Träger mit Kombinationen daraus. Beispielsweise basieren die textilen Gebilde auf Wolle, Baumwolle, Flachs, Ramie, Sisal, Hanf, Polyacrylnitril, Polyester- und Polyamidfasern, Viskose, Seide, Aramidfasern, Triacetat- und Acetatfasern. In einer anderen bevorzugten Anwendung werden auch flexible nicht-textile Trägermaterialien wie flexible Folien, Leder, schon beschichtete oder bedruckte Textilien, Kunstleder oder Papier beschichtet. In einer weiteren bevorzugten Ausführungsform werden polymere offenzellige, geschlossenzellige oder Integralschäume beschichtet. Solche Schäume können prinzipiell aus beliebigen polymeren Materialien bevorzugt aber auf Basis von Polyurethanen, Polyolefinen oder PVC hergestellt werden. Die zu beschichtenden Schäume können vor der Beschichtung noch mit einer Folie, einem Textil und / oder einer Beflockung versehen werden, um die Beschichtungsqualität zu verbessern.

Möglich ist natürlich auch die Beschichtung von wenig flexiblen und unflexiblen Flächen.

Die Dicke der Beschichtung mit der elektrisch leitfähigen Masse liegt in der Regel zwischen 10 und 1000 µm, bevorzugt zwischen 20 und 300 µm.

Auftragsverfahren für die erfindungsgemäße Zusammensetzung sind beispielsweise generell alle Druckverfahren wie Hochdruck, Flachdruck, Tiefdruck oder Durchdruck sowie Rasterdruck, Digitaldruck, Siebdruck, Schablonendruck, indirekte und direkte Druckverfahren, Tampondruck, Spritzen, Sprühen, Rollen, Pflatschen, Rakeln, Streichen oder Tauchen, wobei sich der Siebdruck und indirekte Druckverfahren als besonders geeignet herausgestellt haben.

Ein Auftrag kann beispielsweise als verdünnte Flotte, als Schaum oder als Paste erfolgen. Der Auftrag der erfindungsgemäßen Zusammensetzung auf den gewünschten Untergrund kann auch beispielsweise in einem direkten oder in einem Umkehrbeschichtungsverfahren (Transferbeschichtung) erfolgen.

Die vorliegende Erfindung wird im Folgenden anhand von Beispielen und drei Figuren näher erläutert. Darin zeigt
- Fig. 1: das Leitfähigkeitsprofil erfindungsgemäßer Zusammensetzungen im Vergleich zu Zusammensetzungen ohne Zugabe von organischen Flüssigsalzen,
- Fig. 2: das Leitfähigkeitsprofil erfindungsgemäßer Zusammensetzungen im Vergleich zu Zusammensetzungen ohne Zugabe von organischen Flüssigsalzen, sowie
- Fig. 3: eine fotografische Abbildung eines Prüfkörpers.

In den angeführten Beispielen wird die Einarbeitung der leitfähigen Partikel in wässrige Dispersionen beschrieben. Prinzipiell können die leitfähigen Partikel jedoch in beliebige flüssige oder durch Lösungsmittel oder Weichmacher verflüssigte oder durch den Eintrag thermischer Energie verflüssigte Polymersysteme eingebracht werden. So können die Partikel in Gummimischungen oder Thermoplasten durch Verfahren wie Kneten, Kalandrieren, Walzen oder Extrudieren homogen eingebracht werden bzw. in verflüssigte Systeme eingerührt werden.

Zur Illustration werden hier zur Darstellung einer polymeren Matrix, in der elektrisch leitfähiges Partikel und organisches Flüssigsalz enthalten sind, wässrige Polyurethandispersionen verwendet. Diese Massen werden auf die Textilseite eines Kunstleders aufgetragen und nachfolgend thermisch ausgehärtet.

Die beschichteten Kunstledermuster werden nachfolgend hinsichtlich des elektrischen Widerstands im unbelasteten Zustand und hinsichtlich der Dehnung, bei der der elektrische Widerstand einen Wert > 100 Ohm erreicht, charakterisiert. Zur detaillierteren Auswertung werden auch die Dehnungen herangezogen, bei der ein Widerstand von 20, 30 und 50 Ohm erreicht wird.

### Messung des elektrischen Widerstands

Die Messungen der elektrischen Widerstände erfolgte jeweils im eingespannten Zustand in einer Zugprüfmaschine an Prüfmustern mit einer definierten Probengröße (Größe 150 x 50 mm; Einspannlänge 60 mm), wodurch die Vergleichbarkeit der Messungen gewährleistet wurde. Die Bestimmung des elektrischen Widerstandswerts erfolgte jeweils mit dem Messgerät Ahlborn Almemo 2590, welches über Krokodilklemmen mit den freien Drahtenden am Prüfkörper verbunden war, und auf der Einspannlänge des Probekörpers in einer Zugprüfmaschine abgelesen.

### Messung der Dehnung, bei der der elektrische Widerstand einen Wert > 100 Ohm erreicht (Dehnstufentest)

Die Dehnfähigkeit der leitfähigen Schicht wurde in einem Dehnstufentest bestimmt. Beim Dehnstufentest wurde mit jedem Labormuster eine Dreifachbestimmung durchgeführt und der Mittelwert der drei Messungen berechnet. Dieser wurde für die weitere Auswertung verwendet.

Die fertig kontaktierte Probe wurde in die Zugprüfmaschine eingespannt und die Klemmen des Multimeters an der Kontaktierung befestigt. Die Einspannlänge betrug 60 mm. Nachdem der Startwiderstand gemessen wurde, begann der Dehnstufentest. Zunächst wurde die Probe einer Vorkraft von 1,0 N ausgesetzt. Dann wurde die Probe stufenweise um je 2,5 % gedehnt. Die Traversengeschwindigkeit betrug bei der Dehnung 10 mm/min. Zwischen den Dehnstufen lag eine Pause von 30 Sekunden. Die Pause zwischen den Dehnstufen war erforderlich, um eine Stabilisierung des schwankenden Widerstandes zu ermöglichen. Während des gesamten Tests wurde der Widerstand der Probe mit dem Multimeter und der dazugehörigen Software aufgenommen. Der Widerstand am Ende jeder Stufe wurde notiert und für die Auswertung verwendet. Sobald ein Widerstand von 100 Ohm überschritten wird, konnte der Dehnstufentest beendet werden.

### Herstellung der Beschichtungsmassen

Die Herstellung der Beschichtungsmasse wird exemplarisch anhand des Beispiels Nr. 12 beschrieben. 200 g einer wässrigen aliphatischen Polyester-Polyurethandispersion (mit 50 % Festkörpergehalt), 195 g von elektrisch leitfähige Partikel mit dendritischer Form auf Basis von oberflächlich mit Silber beschichtetem Kupfer (A) und 3 g eines organischen Flüssigsalzes (Basionics LQ01, BASF, 1-Ethyl-3-methyl-imidazoliniumethylsulfat), 1,8 g eines assoziativ wirksamen Verdickers (Borchigel 0625, Borchers) und 3 g eines Isocyanatvernetzers auf Basis von trimeren Hexamethylendiisocyanat mit 21,8 % Gehalt an freien Isocyanatgruppen (Desmodur DN, Bayer Material Science) wurden unter Rühren mit einem Dissolver bei 800 Umdrehungen/Minute homogen vermischt. Die so hergestellte Masse kann zur Darstellung von Prüfkörpern (z.B. Beschichtung von Folien oder Textilien) verwendet werden.

### Herstellung von Prüfkörpern und Darstellung der Beschichtung

Die Beschichtung der PET-Folie (Fa. Jafoplast, 300 µm Dicke) mit der hergestellten Paste wurde an einer Beschichtungsanlage der Firma Werner Mathis AG durchgeführt. Zuerst wurde die zu beschichtende PET-Folie in den zur Beschichtungsanlage gehörenden Rahmen eingespannt.

Anschließend wurde das Rakelmesser eingesetzt und ein Rakelspalt von 250 µm eingestellt.

Die hergestellte Paste wurde vor das Messer gegeben. Durch Vorziehen des Messers wurde die Paste gleichmäßig auf der Folie verstrichen. Danach wurde die Folie mitsamt Masse in den temperierten Ofen gefahren. Die Aushärtung erfolgte in dem Ofen bei 80°C für vier Minuten.

### Kontaktieren der Proben

Aus dem so erstellten Mustern wurden jeweils drei Probenstreifen mit einer Länge von 150 mm und einer Breite von 50 mm ausgestanzt. Auf diese Streifen wird im Abstand von 65 mm die Kontaktierung auf folgende Weise aufgetragen:
Zuerst wurden zwei textile Bänder (Artikel 3750 der Fa. A.Mohr Technische Textilien GmbH, 18 mm Breite), welche elektrisch leitfähige Drähte und einen Schmelzklebstoff enthalten, auf das Muster gebügelt. Diese Bänder wurden quer über die Breite so aufgebügelt, dass jeweils eine Seite des leitfähigen Bandes ca. 2,3 cm vom Probenrand entfernt war und beide Leitfähigkeitsbänder parallel mit 7,8 cm beabstandet waren. Die außen überstehende Fläche wurde zum Einspannen in eine Zug-Prüf-Maschine benötigt.

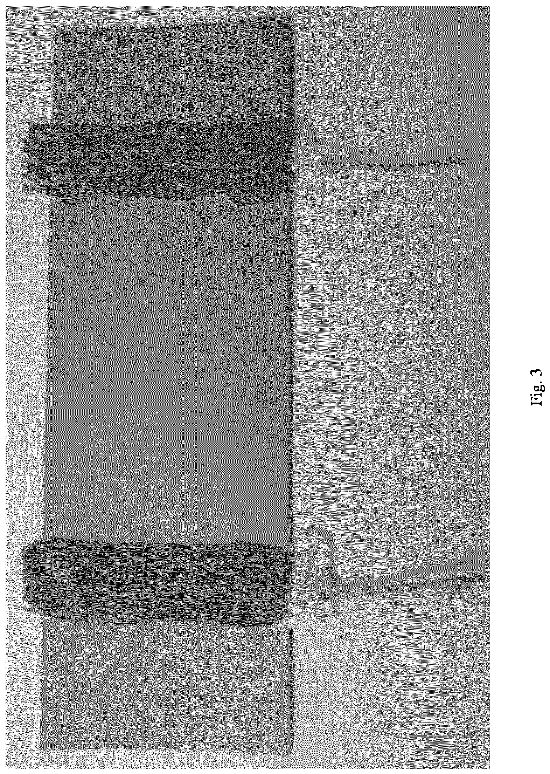

Danach wurde mit einem Pinsel das textile Band mit der schon zur Beschichtung der Folie verwendeten leitfähigen Paste so bestrichen, dass die leitfähigen Drähte im Kontaktband eine innige Verbindung mit der beschichteten Fläche eingehen. Anschließend wurde der Prüfkörper für vier Minuten bei 80°C getrocknet. Abschließend wurden die überstehenden Drähte von dem Textil befreit und zusammengedreht. Eine fotografische Aufnahme eines auf diese Weise hergestellten Prüfkörpers ist in Fig. 3 abgebildet.

### Beschreibung Figuren und Tabellen

Aus den beigefügten Figuren und Tabellen ist ersichtlich, dass eine gegenüber dem Stand der Technik deutlich verbesserte Dehnfähigkeit einer Beschichtung basierend auf der erfindungsgemäßen Zusammensetzung erzielt werden kann, wobei gegenüber dem Stand der Technik ein deutlich geringerer Anteil an teuren elektrisch leitfähigen Partikel notwendig ist, um eine gleiche oder sogar bessere Dehnfähigkeit zu erzielen.

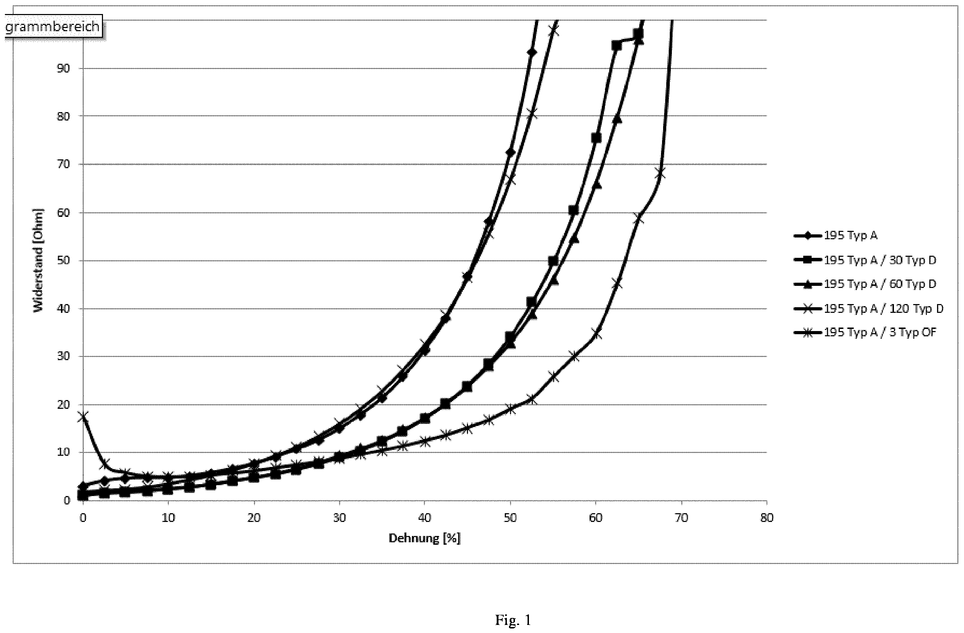

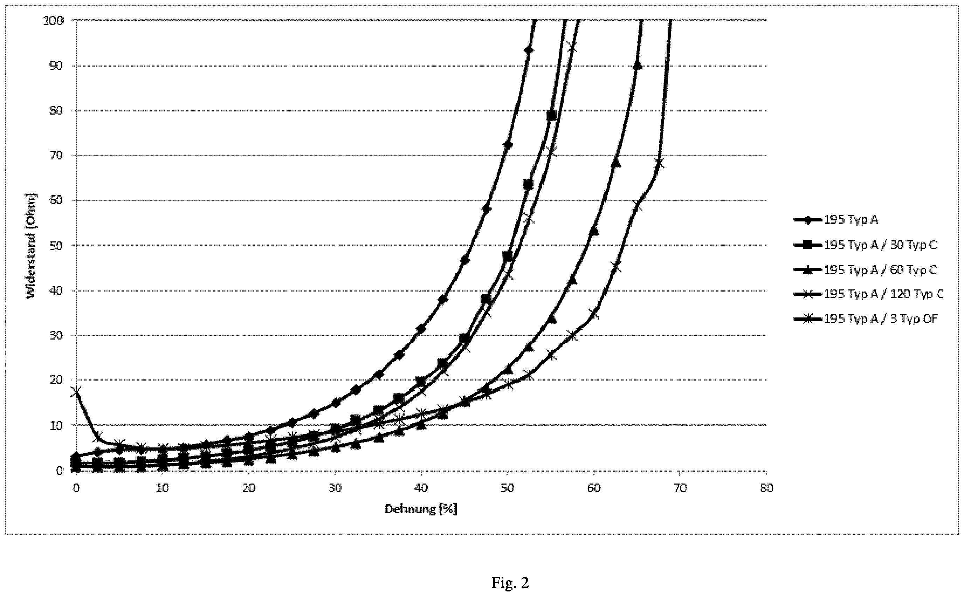

Dieses wird im Folgenden anhand der Fig. 1 und 2 sowie der Tabellen 1-3 erläutert:
Die Auftragung in Fig. 1 zeigt, das unerwartete Leitfähigkeitsprofil erfindungsgemäßer Zusammensetzungen anhand von Beispiel 12 (195 Typ A / 3 Typ OF) im Vergleich zu Zusammensetzungen ohne Zugabe von organischen Flüssigsalzen (OF). Jeder Datenpunkt wurde durch Bestimmung des Mittelwertes aus drei Messungen erhalten. Gezeigt ist, dass die Leitfähigkeit bei höheren Dehnungen einer Referenzzusammensetzung mit einem Gewichtsverhältnis von Matrixpolymer zu elektrisch leitfähigen Partikel von 1:1,95, wobei die Partikel eine dendritischer Form aufweisen, (A) dadurch verbessert werden kann, dass elektrisch leitfähige, versilberte Nickel Partikel (D) im Gewichtsverhältnis 1:0,3 bzw. 1:0,6 der Rezeptur zugefügt werden. Die Zufügung dieser Partikel im Gewichtsverhältnis 1:1,2 hat keinen weiteren signifikanten Effekt, vielmehr sinkt bei Zugabe größerer Mengen Partikel des Typs D die Leitfähigkeit bei gleicher Dehnung wieder ab (Leitfähigkeit = Kehrwert des spezifischen Widerstandes). Hingegen ist durch Zugabe geringer Mengen eines organischen Flüssigsalzes eine bessere Leitfähigkeit bei höheren Dehnungen erreichbar. Ohne an die Erklärung gebunden zu sein wird davon ausgegangen, dass der Abfall des Anfangswiderstandes bei geringerer Dehnung dadurch erklärt werden kann, dass durch die Dehnung die ionische Flüssigkeit zwischen die festen leitfähigen Partikel rutschen kann und insbesondere bei den relativ großen leitfähigen Partikeln mit dendritischer Form die Leitfähigkeit insgesamt verbessert.

Die Auftragung in Fig. 2 zeigt, das unerwartete Leitfähigkeitsprofil erfindungsgemäßer Zusammensetzungen anhand von Beispiel 12 (195 Typ A / 3 Typ OF) im Vergleich zu Zusammensetzungen ohne Zugabe von organischen Flüssigsalzen. Jeder Datenpunkt wurde durch Bestimmung des Mittelwertes aus drei Messungen erhalten. Gezeigt ist, dass die Leitfähigkeit bei höheren Dehnungen einer Referenzzusammensetzung mit einem Gewichtsverhältnis von Matrixpolymer zu elektrisch leitfähigen Partikel von 1:1,95, wobei die Partikel eine dendritischer Form aufweisen, (A) dadurch verbessert werden kann, dass elektrisch leitfähige, versilberte Nickel Partikel (C) im Gewichtsverhältnis 1:0,3 bzw. 1:0,6 der Rezeptur zugefügt werden. Die Zufügung dieser Partikel im Gewichtsverhältnis 1:1,2 hat keinen weiteren signifikanten Effekt, vielmehr sinkt bei Zugabe größerer Mengen Partikel des Typs C die Leitfähigkeit bei gleicher Dehnung wieder ab (Leitfähigkeit = Kehrwert des spezifischen Widerstandes). Hingegen ist durch Zugabe geringer Mengen eines organischen Flüssigsalzes eine bessere Leitfähigkeit bei höheren Dehnungen erreichbar.

Die Tabelle 1 zeigt in der Übersicht die signifikant verbesserte elektrische Leitfähigkeit bei Dehnung der erfindungsgemäßen Zusammensetzungen gegenüber den Referenzrezepturen 1 - 11.Die Dehnbarkeit von Referenzrezeptur mit einem Gewichtsverhältnis von Matrixpolymer zu elektrisch leitfähigen Partikel des Typs A (A) von 1:1,95 bei gleichbleibender Leitfähigkeit kann durch Zugabe größerer Mengen Partikel des Typs B, C oder D ((B), (C) oder (D)) bedingt verbessert werden (Beispiele 5-11 gegenüber Beispiel 1). Jedoch reichen bereits geringe Mengen organischen Flüssigsalzes (OF) aus, wesentlich größere Dehnungen bei gleichbleibender Leitfähigkeiten von erfindungsgemäßen Zusammensetzungen zu erreichen (Beispiele 12-14). Noch bessere Resultate konnten erreicht werden, wenn Partikel des Typs A gegen Partikel des Typs B ausgetauscht wurden (Beispiele 15-17).

Wie aus der Tabelle ersichtlich kann nur bei einem sehr hohen Anteil von 255% an dendritische Leitfähigkeitspartikeln des Typs A, erreicht werden, dass ein Polymerfilm über 70% gedehnt werden kann, ohne dass der elektrische Widerstand 20 Ohm/10 cm überschreitet. Dieses geschieht hier bei 78% Dehnung. (Beispiel 2). Hohe Werte (195% bzw. 255%) alternativer Leitfähigkeitspartikel vom Typ B in Abwesenheit von dendritischen Leitfähigkeitspartikeln des Typs A zeigen in beiden Fällen wesentlich schlechtere Leitfähigkeiten solcher Zusammensetzungen (Beispiele 3 und 4). Hingegen werden in den erfindungsgemäßen Beispielen 12-14 gute Dehnungen ohne dass der elektrische Widerstand 20 Ohm/10 cm überschreitet bereits durch Zugabe von geringen Mengen eines organischen Flüssigsalzes erreicht und bei den erfindungsgemäßen Beispielen 15-17 kann eine weitaus bessere Dehnung, ohne dass der elektrische Widerstand 20 Ohm/10 cm überschreitet, erreicht werden.

Tabelle 2 zeigt, dass sich durch den zusätzlichen Einsatz von Vernetzern, die Dehnfähigkeit noch einmal verbessern lässt.

Die Tabelle 3 zeigt den besonderen Vorteil des Einsatzes von Verdickern als Verträglichkeitsvermittler zwischen den in der erfindungsgemäßen Zusammensetzung enthaltenem organischen Flüssigsalz und dem Matrixpolymer. Enthält die Formulierung einen Verdicker, so wird eine mögliche Phasenbildung von organischem Flüssigsalz und restliche Zusammensetzung in zwei Phasen bei der Herstellung einer erfindungsgemäßen Zusammensetzung unterbunden.

**Tabelle 1: Massenanteil Matrixpolymer in Zusammensetzung jeweils 100 g**

| | Masseanteil dendritische Leitfähigkeitspartikel in der Rezeptur [%] | Masseanteil alternative Leitfähigkeitspartikel in der Rezeptur [%] | Masseanteil ionische Flüssigkeit in der Rezeptur [%] | Masseanteil Vernetzer in der Rezeptur [%] | Masseanteil Verdicker (E) in der Rezeptur [%] | Widerstand bei 0% Dehnung [Ω] | Dehnung bei der Widerstandswert > 20 Ω/10 cm erreicht wird[%] | Dehnung bei der Widerstandswert > 30 Ω /10 cm erreicht wird[%] | Dehnung bei der Widerstandswert >50 Ω /10 cm erreicht wird [%] |
|---|---|---|---|---|---|---|---|---|---|
| 1 | 195 (A) | | | 3 | 1,8 | 3,0 | 34 | 40 | 45 |
| 2 | 255 (A) | | | 3 | 1,8 | 0,4 | 78 | 88 | * |
| 3 | | 195 (B) | | 3 | 1,8 | 6,2 | 12 | 15 | 17 |
| 4 | | 255 (B) | | 3 | 1,8 | 4,4 | 9 | 10 | 12 |
| 5 | 195 (A) | 30 (C) | | 3 | 1,8 | 1,6 | 38 | 43 | 48 |
| 6 | 195 (A) | 60 (C) | | 3 | 1,8 | 0,8 | 48 | 53 | 58 |
| 7 | 195 (A) | 120 (C) | | 3 | 1,8 | 1,1 | 41 | 45 | 51 |
| 8 | 195 (A) | 60 (B) | | 3 | 1,8 | 0,4 | 37 | 41 | 47 |
| 9 | 195 (A) | 30 (D) | | 3 | 1,8 | 1,2 | 42 | 48 | 55 |
| 10 | 195 (A) | 60 (D) | | 3 | 1,8 | 1,2 | 42 | 48 | 57 |
| 11 | 195 (A) | 120 (D) | | 3 | 1,8 | 1,8 | 33 | 39 | 46 |
| 12 | 195 (A) | | 3 (Typ IL) | 3 | 1,8 | 16,7 | 51 | 58 | 65 |
| 13 | 195 (A) | | 8 (Typ IL) | 3 | 1,8 | 108,5 | 61 | 68 | 71 |
| 14 | 195 (A) | | 13 (Typ IL) | 3 | 1,8 | 102 | 70 | 76 | 85 |
| 15 | | 195 (B) | 3 (Typ IL) | 3 | 1,8 | 0,6 | 78 (62 % Dehnung bei 10 Ω) | * | * |
| 16 | | 195 (B) | 8 (Typ IL) | 3 | 1,8 | 0,5 | * (89 % Dehnung bei 10 Ω) | * | * |
| 17 | | 195 (B) | 13 (Typ IL) | 3 | 1,8 | 0,4 | * (89 % Dehnung bei 10 Ω) | * | * |
| 24 | | 127,5 (B) | 3 Typ (IL) | 3 | 1,8 | 1,0 | * (77 % Dehnung bei 10 Ω) | * | * |

| | | | | | | | | | |
|---|---|---|---|---|---|---|---|---|---|
| *außerhalb des Messbereichs (> 90 % Dehnung) Leitfähigkeitsadditive: A: Dendritische Leitfähigkeitspartikel: silberbeschichtete Kupferpartikel mit dendritischer Gestalt (durchschnittlicher Partikeldurchmesser = 35 µm, Silbergehalt 18 %), Conduct-O-Fil, SC500P18, Fa. Potters Industries Inc. B: silberbeschichtete Glashohlkugeln (durchschnittlicher Partikeldurchmesser =14 µm, Silbergehalt 33 %), Conduct-O-Fil, SH400S33, Fa. Potters Industries Inc. C: silberbeschichtete Glasfasern (durchschnittlicher Fasergröße = 15 x 130 µm, Silbergehalt 20 %), Conduct-O-Fil, SF82TF8, Fa. Potters Industries Inc. D: silberbeschichtete Nickelpartikel (durchschnittlicher Partikeldurchmesser =8 µm, Silbergehalt 40 %), Conduct-O-Fil, SN40P08, Fa. Potters Industries Inc. OF: organisches Flüssigsalz, 1-Ethyl-3-methyl imidazolinium ethylsulfat Basionics LQ01, BASF Vernetzer: Isocyanat-Vernetzer: auf Basis von Hexamethylendiisocyanat mit 21,8 % Gehalt an freien Isocyanatgruppen. E: assoziativ wirksamer Polyurethanverdicker, Borchigel 0625, Borchers F: assoziativ wirksamer Acrylatverdicker, Lyoprint TFC-01, Huntsman | | | | | | | | | |

**Tabelle 2: Massenanteil Matrixpolymer in Zusammensetzung jeweils 100 g**

| | Masseanteil dendritische Leitfähigkeitspartikel in der Rezeptur [%] | Masseanteil organisches Flüssigsalz in der Rezeptur[%] | Masseanteil an Isocyanat -haltigem Vernetzer [%] | Dehnung bei der Widerstandswert > 20 Ohm/10 cm erreicht [%] |
|---|---|---|---|---|
| 18 | 195 (A) | 3 (OF) | 1,3 | 45 |
| 12 | 195 (A) | 3 (OF) | 3,0 | 51 |
| 19 | 195 (A) | 3 (OF) | 5,4 | 54 |

**Tabelle 3: Massenanteil Matrixpolymer in Zusammensetzung jeweils 100 g**

| | Masseanteil dendritische Leitfähigkeitspartikel in der Rezeptur [%] | Masseanteil organisches Flüssigsalz in der Rezeptur[%] | Masseanteil an Verdicker in der Rezeptur [%] | Erscheinungsbild der Masse nach 24 h Lagerung bei Raumtemperatur |
|---|---|---|---|---|
| 20 | 195 (A) | 3 (OF) | | 2 Phasen |
| 12 | 195 (A) | 3 (OF) | 1,8 (E) | homogen |
| 21 | 195 (A) | 58 (OF) | 1,8 (E) | homogen |
| 22 | 195 (A) | 15 (OF) | 1,8 (F) | homogen |
| 23 | 195 (A) | 15 (OF | 3 (F) | homogen |

## Patentansprüche

1. Zusammensetzung umfassend mindestens ein Matrixpolymer, elektrisch leitfähige Partikel, mindestens ein organisches Flüssigsalz und wenigstens einen Verdicker wobei
das Gewichtsverhältnis zwischen dem mindestens einem Matrixpolymer und elektrisch leitfähigen Partikeln zwischen 4:1 und 1:5 liegt; und
das Gewichtsverhältnis zwischen Matrixpolymer und organischem Flüssigsalz zwischen 1000:1 und 1:1 liegt; und
die Summe der Gewichte aus Matrixpolymer, elektrisch leitfähigen Partikeln und organischem Flüssigsalz mindestens 65% bezogen auf das Gesamtgewicht der Zusammensetzung beträgt.

2. Zusammensetzung gemäß Anspruch 1, wobei das Matrixpolymer ausgewählt ist aus einer Gruppe bestehend aus Polyurethanharz, Acrylatharz, Styrolacrylat, Styrol/Butadien-Coplymerisat, Polyvinylester, Vinylester-Olefin-Copolymer, Vinylester-Acrylat-Copolymer oder Silikonkautschuk.

3. Zusammensetzung gemäß Anspruch 1 oder 2, wobei das elektrisch leitfähige Partikel in der Zusammensetzung aus dreidimensional verzweigten Partikeln besteht.

4. Zusammensetzung gemäß Anspruch 3, wobei die dreidimensional verzweigten Partikel dendritisch sind.

5. Zusammensetzung gemäß Anspruch 3 oder 4, wobei die Partikel mit Silber beschichtet sind.

6. Zusammensetzung gemäß einem der vorhergehenden Ansprüche, wobei das organische Flüssigsalz ein organisches Kation enthält, das ausgewählt ist aus der Gruppe bestehend aus gegebenenfalls substituiertem aromatischen Kation mit 5, 6, 9, 10 oder 14 Kohlenstoffringatomen, wobei ein, zwei, drei oder vier Kohlenstoffringatome durch ein Schwefel, Sauerstoff und/oder Stickstoffatom ausgetauscht sein können, und ein gegebenenfalls substituiertes aliphatisches C1-C12-Aminoalkyl.

7. Zusammensetzung gemäß einem der vorhergehenden Ansprüche, wobei das organische Flüssigsalz aus einem Salz besteht worin das Kation ausgewählt ist aus der Gruppe bestehend aus Imidazolinium-, Pyridinium-, Pyrrolidinium-, Guanidinium-, Uronium-, Thiouronium-, Piperidinium-, Morpholinium-, Phosphonium-, C₁-C₆-Alkylammonium-, jeweils mit ein, zwei oder drei Gruppen unabhängig voneinander ausgewählt aus Amino, C₁-C₆-Hydroxyalkyl, Hydroxy, Halogen, C₁-C₆-Halogenalkyl, C₁-C₆-Alkyl substituiertes Imidazolinium-, Pyridinium-, Pyrrolidinium-, Guanidinium-, Uronium-, Thiouronium-, Piperidinium-, Morpholinium-, Phosphonium-, und Alkylammonium-Kation.

8. Zusammensetzung gemäß einem der Ansprüche 1 bis 7, wobei Verdicker hydrophobe und hydrophile Bestandteile besitzen ausgewählt aus hydrophob modifizierte Polyacrylate, Celluloseether, Polyacrylamide oder Polyether.

9. Verwendung einer Zusammensetzung nach einem der Ansprüche 1 bis 8 als Beschichtungsmaterial.

10. Verwendung einer Zusammensetzung nach einem der Ansprüche 1 bis 8 als Bestandteil eines Sitz- oder Liegemöbels.

11. Verwendung einer Zusammensetzung nach einem der Ansprüche 1 bis 8 zum Aufbau mehrschichtiger Verbundgebilde.

12. Verfahren zur Herstellung einer Zusammensetzung gemäß einem der Ansprüche 1 bis 8 umfassend die folgende Verfahrensschritte:
- Mischen wenigstens einer wässrigen Matrixpolymerdispersion mit elektrisch leitfähigen Partikeln wobei das Gewichtsverhältnis zwischen dem mindestens einem Matrixpolymer und elektrisch leitfähigen Partikeln zwischen 4:1 und 1:5 liegt mit wenigstens einem Verdicker und optional Wasser und
- Hinzufügen von mindestens einem organischem Flüssigsalz wobei das Gewichtsverhältnis zwischen Matrixpolymer und organischem Flüssigsalz zwischen 1000:1 und 1:1 liegt, und, und
- optional hinzufügen von wenigstens einem Verdickungsmittel, und
- optional hinzufügen von weiteren Zusatzstoffen, und
- Optional entfernen von Wasser.

13. Verfahren gemäß Anspruch 12, wobei ein weiterer Zusatzstoff hinzugefügt wird, bei dem es sich um einen Vernetzer handelt und das Verhältnis Matrixpolymer zu Vernetzer zwischen 10000:1 und 3:1 liegt.

14. Polymerfolie hergestellt nach einem Verfahren umfassend die Schritte wie in Ansprüchen 12 und 13 beschrieben.

## Claims

1. Composition comprising at least one matrix polymer, electrically conductive particles, at least one organic liquid salt and at least one thickener, wherein
the weight ratio between the at least one matrix polymer and electrically conductive particles is between 4:1 and 1:5; and
the weight ratio between matrix polymer and organic liquid salt is between 1000:1 and 1:1; and
the sum of the weights of matrix polymer, electrically conductive particles and organic liquid salt is at least 65%, based on the total weight of the composition.

2. Composition according to Claim 1, wherein the matrix polymer is selected from a group consisting of polyurethane resin, acrylate resin, styrene acrylate, styrene/butadiene copolymer, polyvinyl ester, vinyl ester-olefin copolymer, vinyl ester-acrylate copolymer or silicone rubber.

3. Composition according to Claim 1 or 2, wherein the electrically conductive particle in the composition consists of three-dimensionally branched particles.

4. Composition according to Claim 3, wherein the three-dimensionally branched particles are dendritic.

5. Composition according to Claim 3 or 4, wherein the particles are coated with silver.

6. Composition according to any of the preceding claims, wherein the organic liquid salt comprises an organic cation selected from the group consisting of optionally substituted aromatic cation with 5, 6, 9, 10 or 14 carbon ring atoms, wherein one, two, three or four carbon ring atoms may have been replaced by a sulfur, oxygen and/or nitrogen atom, and an optionally substituted aliphatic C1-C12 aminoalkyl.

7. Composition according to any of the preceding claims, wherein the organic liquid salt consists of a salt in which the cation is selected from the group consisting of imidazolinium, pyridinium, pyrrolidinium, guanidinium, uronium, thiouronium, piperidinium, morpholinium, phosphonium and C₁-C₆ alkylammonium and of imidazolinium, pyridinium, pyrrolidinium, guanidinium, uronium, thiouronium, piperidinium, morpholinium, phosphonium and alkylammonium cation in each case substituted by one, two or three groups selected independently of one another from amino, C₁-C₆ hydroxyalkyl, hydroxyl, halogen, C₁-C₆ haloalkyl and C₁-C₆ alkyl.

8. Composition according to any of Claims 1 to 7, wherein thickeners possess hydrophobic and hydrophilic constituents selected from hydrophobically modified polyacrylates, cellulose ethers, polyacrylamides or polyethers.

9. Use of a composition according to any of Claims 1 to 8 as coating material.

10. Use of a composition according to any of Claims 1 to 8 as part of a furniture item for sitting or lying.

11. Use of a composition according to any of Claims 1 to 8 for constructing multi-layer composite structures.

12. Process for producing a composition according to any of Claims 1 to 8, comprising the following process steps:
- mixing at least one aqueous matrix polymer dispersion with electrically conductive particles, wherein the weight ratio between the at least one matrix polymer and electrically conductive particles is between 4:1 and 1:5, with at least one thickener and optionally water, and
- adding at least one organic liquid salt, wherein the weight ratio between matrix polymer and organic liquid salt is between 1000:1 and 1:1, and
- optionally adding at least one thickener, and
- optionally adding further additives, and
- optionally removing water.

13. Process according to Claim 12, wherein a further additive is added which is a crosslinker, the ratio of matrix polymer to crosslinker being between 10,000:1 and 3:1.

14. Polymer film produced by a process comprising the steps as described in Claims 12 and 13.

## Revendications

1. Composition comprenant au moins un polymère matrice, des particules électroconductrices, au moins un sel liquide organique et au moins un épaississant, dans laquelle
le rapport pondéral entre ledit au moins un polymère matrice et les particules électroconductrices est compris entre 4 : 1 et 1 : 5 ; et
le rapport pondéral entre polymère matrice et sel liquide organique est compris entre 1 000 : 1 et 1 : 1 ; et
la somme des poids de polymère matrice, particules électroconductrices et sel liquide organique représente au moins 65 % par rapport au poids total de la composition.

2. Composition selon la revendication 1, dans laquelle le polymère matrice est choisi dans un groupe constitué par une résine polyuréthane, une résine acrylate, un styrène/acrylate, un copolymérisat styrène/butadiène, un poly(ester vinylique), un copolymère ester vinylique/oléfine, un copolymère ester vinylique/acrylate ou un caoutchouc silicone.

3. Composition selon la revendication 1 ou 2, dans laquelle la particule électroconductrice dans la composition consiste en des particules à ramification tridimensionnelle.

4. Composition selon la revendication 3, dans laquelle les particules à ramification tridimensionnelle sont dendritiques.

5. Composition selon la revendication 3 ou 4, dans laquelle les particules sont enrobées avec de l'argent.

6. Composition selon l'une quelconque des revendications précédentes, dans laquelle le sel liquide organique contient un cation organique qui est choisi dans le groupe constitué par un cation aromatique éventuellement substitué à 5, 6, 9, 10 ou 14 atomes de carbone dans le cycle, un, deux, trois ou quatre atomes de carbone dans le cycle pouvant être remplacés par un atome de soufre, un atome d'oxygène et/ou un atome d'azote, et un groupe aminoalkyle(C₁-C₁₂) aliphatique éventuellement substitué.

7. Composition selon l'une quelconque des revendications précédentes, dans laquelle le sel liquide organique consiste en un sel dans lequel le cation est choisi dans le groupe constitué par un cation imidazolinium, pyridinium, pyrrolidinium, guanidinium, uronium, thio-uronium, pipéridinium, morpholinium, phosphonium, alkyl(C₁-C₆) ammonium, un cation imidazolinium, pyridinium, pyrrolidinium, guanidinium, uronium, thio-uronium, pipéridinium, morpholinium, phosphonium ou alkylammonium substitué dans chaque cas par un, deux ou trois groupes choisis indépendamment parmi amino, hydroxyalkyle(C₁-C₆), hydroxy, halogéno, halogénoalkyle(C₁-C₆), alkyle en C₁-C₆.

8. Composition selon l'une quelconque des revendications 1 à 7, dans laquelle les épaississants possèdent des composants hydrophobes et hydrophiles, choisis parmi des polyacrylates à modification hydrophobe, des éthers de cellulose, polyacrylamides ou polyéthers.

9. Utilisation d'une composition selon l'une quelconque des revendications 1 à 8 en tant que matériau de revêtement.

10. Utilisation d'une composition selon l'une quelconque des revendications 1 à 8 en tant que partie constitutive d'un meuble d'assise ou de couchage.

11. Utilisation d'une composition selon l'une quelconque des revendications 1 à 8 pour la construction d'articles composites multicouches.

12. Procédé pour la préparation d'une composition selon l'une quelconque des revendications 1 à 8, comprenant les étapes de procédé suivantes :
- mélange d'au moins une dispersion aqueuse de polymère matrice avec des particules électroconductrices, le rapport pondéral entre ledit au moins un polymère matrice et les particules électroconductrices étant compris entre 4 : 1 et 1 : 5, avec au moins un épaississant et en option de l'eau et
- addition d'au moins un sel liquide organique, le rapport pondéral entre polymère matrice et sel liquide organique étant compris entre 1 000 : 1 et 1 : 1 ; et
- en option addition d'au moins un épaississant, et
- en option addition d'autres additifs, et
- en option élimination d'eau.

13. Procédé selon la revendication 12, dans lequel on ajoute un additif supplémentaire, qui consiste en un agent de réticulation et le rapport polymère matrice à agent de réticulation est compris entre 10 000 : 1 et 3 : 1.

14. Film polymère produit selon un procédé comprenant les étapes telles que décrites dans les revendications 12 et 13.
